# EUROPEAN PATENT APPLICATION

(11) **EP 2 447 701 A2**
(43) Date of publication of application: **02.05.2012**
(21) Application number: 11186666.1
(22) Date of filing: 26.10.2011
(51) Int. Cl.: G01N 1/31, G01N 35/02, G01N 35/00

(54) **Sample processing system and method of processing sample**

(30) Priority: 28.10.2010 JP 2010242675
(71) Applicant: SYSMEX CORPORATION, Kobe-shi, Hyogo 651-0073 (JP)
(72) Inventor: Tatsutani, Hiroo, Hyogo, 651-0073 (JP)
(74) Representative: HOFFMANN EITLE

(57) **Abstract**

A sample processing system comprising: a transporting device that transports a sample; a plurality of sample processing devices that are arranged along a transport path for the sample transported by the transporting device and configured to process the sample transported by the transporting device based on a processing order; a controller configured to receive a first processing order for the sample and control the transporting device to transport the sample based on the received first processing order, and configured to receive a second processing order for the sample additionally and control the transporting device to transport the sample based on the received second processing order; and a display, wherein the controller is configured to prompt the display to show progress information indicating a progress status of processing the sample with respect to each of the first and second processing orders. A method of processing sample in a sample processing system.

## Description

### BACKGROUND OF THE INVENTION

### FIELD OF THE INVENTION

The present invention relates to a sample processing system which performs processes such as sample measurement and smear preparation, and a method of processing sample.

### BACKGROUND ART

Sample processing systems have been known which read out sample identification information from a barcode stuck on a sample container containing a sample by a barcode reader, transport the sample of which the sample identification information is read out to a sample processing device such as a multiple blood cell analyzer or a blood smear preparation device, and perform a process according to the sample identification information using the sample processing device (for example, see U.S. Patent Publication No. 2010/0101339).

U.S. Patent Publication No. 2010/0101339 discloses a sample processing system which displays a sample transport status by an examination information management device. A screen of the examination information management device described in U.S. Patent Publication No. 2010/0101339 includes a transport status display area in which a layout of the sample processing system is displayed. In this layout, a mark indicating a current position of a sample rack is drawn. In addition, in the transport status display area, a transport path for sample racks which have passed is drawn by a solid line, and a transport path for sample racks which have not passed is drawn by a broken line.

In such a sample processing system, an additional processing order may be generated for the same sample during the transport of the sample to perform the re-examination of the sample, preparation of a smear and the like. However, the above-described sample processing system described in U.S. Patent Publication No. 2010/0101339 does not have a configuration in which when an additional processing order is generated for the same sample, a progress of sample processing is displayed so that a user can understand the addition of a processing order for the sample.

The invention is contrived in view of such circumstances, and a main object of the invention is to provide a sample processing system which displays, when an additional processing order is generated for the same sample as a sample for which a processing order has been generated, a progress of sample processing of the sample in the system in an easy-to-understand manner, and a method of displaying the progress of sample processing.

### SUMMARY OF THE INVENTION

The scope of the present invention is defined solely by the appended claims, and is not affected to any degree by the statements within this summary.
(1) According to a first aspect of the present invention, a sample processing system comprising: a transporting device that transports a sample; a plurality of sample processing devices that are arranged along a transport path for the sample transported by the transporting device and configured to process the sample transported by the transporting device based on a processing order; a controller configured to receive a first processing order for the sample and control the transporting device to transport the sample based on the received first processing order, and configured to receive a second processing order for the sample additionally and control the transporting device to transport the sample based on the received second processing order; and a display, wherein the controller is configured to prompt the display to show progress information indicating a progress status of processing the sample with respect to each of the first and second processing orders.
(2) The sample processing system according to (1), wherein the progress information includes sample processing information indicating whether the sample was processed on the basis of the first or second processing order.
(3) The sample processing system according to (2), wherein the progress information includes specification information which specifies a sample processing device executing the sample processing.
(4) The sample processing system according to (3), wherein the transporting device is provided with a plurality of transporting units corresponding to the plurality of sample processing devices, and the controller prompts the display to show information, as the specification information, which specifies a transporting unit corresponding to the sample processing device executing the sample processing.
(5) The sample processing system according to any one of (1) through (4), wherein the progress information includes position information indicating a position of the sample on the transport path when the controller receives the processing order.
(6) The sample processing system according to any one of (1) through (5), wherein the progress information includes time information indicating a reception time at which the processing order is received.
(7) The sample processing system according to any one of (1) through (6), wherein the controller is configured to additionally receive a third processing order while the sample is transported by the transporting device on the basis of the additionally received second processing order, and configured to prompt the display to show progress information indicating a progress status of processing the sample with respect to each of the first, second, and third processing orders when receiving the third processing order.
(8) The sample processing system according to any one of (1) through (7), wherein the controller is configured to receive a change in the processing order, and the progress information includes information relates to the change in the processing order.
(9) The sample processing system according to any one of (1) through (8), wherein the controller is configured to prompt the display to show a progress screen image which displays the progress information, and when the first and second processing orders are received, the controller controls the display to show the progress screen image which has a first processing order area which displays progress information corresponding to the first processing order, and a second processing order area which displays progress information corresponding to the second processing order.
(10) The sample processing system according to (9), wherein the first processing order area has a first processing item area corresponding to a first processing item and a second processing item area corresponding to a second processing item, and when the first processing item is included in the first processing order, the controller displays, in the first processing item area, processing request information indicating that there is a sample processing request with respect to the first processing item.
(11) The sample processing system according to (10), wherein when the sample has been processed for the first processing item on the basis of the first processing order, the controller displays, in the first processing item area, processing completion information indicating that the sample processing is completed for the first processing item.
(12) The sample processing system according to (10) or (11), wherein when the sample has been processed for the first processing item on the basis of the first processing order, the controller displays in the first processing item area specification information which specifies a sample processing device executing the sample processing for the first processing item.
(13) The sample processing system according to any one of (9) through (12), wherein the second processing order area has a third processing item area corresponding to a first processing item and a fourth processing item area corresponding to a second processing item, and when the first processing item is included in the first and second processing orders, and the sample has been processed for the first processing item on the basis of the second processing order, the controller displays in the third processing item area processing completion information indicating that the sample processing is completed for the first processing item.
(14) The sample processing system according to any one of (9) through (13), wherein the controller displays the first and second processing order areas as lines in the progress screen image.
(15) According to a second aspect of the present invention, a method of processing sample in a sample processing system which includes a transporting device and a plurality of sample processing devices, the method comprising: when receiving a first processing order for processing a sample, transporting the sample by the transporting device on the basis of the received first processing order; displaying progress information indicating a progress status of processing the sample with respect to the first processing order on a display; when receiving a second processing order for processing the sample while the sample is on the transport path, transporting the sample by the transporting device on the basis of the received second processing order; and displaying progress information indicating a progress status of processing the sample with respect to each of the first and second processing orders on the display.

According to (1), when an additional processing order is generated for the same sample as a sample for which a processing order has been generated, a progress of sample processing of the sample in the system can be displayed in an easy-to-understand manner in comparison to conventional cases.
According to (15), when an additional processing order is generated for the same sample as a sample for which a processing order has been generated, a progress of sample processing of the sample in the system can be displayed in an easy-to-understand manner in comparison to conventional cases.

### BRIEF DESCRIPTION OF THE DRAWINGS

Fig. 1 is a schematic plan view showing the entire configuration of a sample processing system according to an embodiment.
Fig. 2 is a perspective view showing the appearance of a sample container.
Fig. 3 is a perspective view showing the appearance of a sample rack.
Fig. 4 is a block diagram showing the configuration of a measuring unit of a blood cell analyzer according to the embodiment.
Fig. 5 is a block diagram showing the schematic configuration of a smear preparation device according to the embodiment.
Fig. 6 is a block diagram showing the configuration of a system control device according to the embodiment.
Fig. 7 is a schematic diagram showing the structure of a sample processing progress database.
Fig. 8 is a plan view showing another arrangement example of the sample processing system.
Fig. 9 is a diagram showing an example of the display of a layout view of the sample processing system.
Fig. 10 is a flowchart showing the procedure of a measurement order acquiring process of the system control device.
Fig. 11 is a schematic diagram showing an example of a progress status table.
Fig. 12A is a flowchart (first half) showing the procedure of a transport control process of the system control device.
Fig. 12B is a flowchart (second half) showing the procedure of a transport control process of the system control device.
Fig. 13 is a schematic diagram showing another example of the progress status table.
Fig. 14 is a schematic diagram illustrating an update of the progress status table when an additional measurement order is generated by the blood cell analyzer.
Fig. 15 is a schematic diagram illustrating an update of the progress status table when the measurement order is changed.
Fig. 16 is a schematic diagram showing an example of the progress status table with progress information updated on the basis of the additional measurement order.
Fig. 17 is a flowchart showing the procedure of a progress status display process of the system control device.
Fig. 18A is a schematic diagram showing an example of a progress status screen.
Fig. 18B is a schematic diagram showing an example of the progress status screen.
Fig. 18C is a schematic diagram showing an example of the progress status screen.
Fig. 18D is a schematic diagram showing an example of the progress status screen.
Fig. 19A is a schematic diagram showing an example of the progress status screen.
Fig. 19B is a schematic diagram showing an example of the progress status screen.
Fig. 19C is a schematic diagram showing an example of the progress status screen.
Fig. 19D is a schematic diagram showing an example of the progress status screen.
Fig. 19E is a schematic diagram showing an example of the progress status screen.
Fig. 20A is a schematic diagram showing an example of the progress status screen.
Fig. 20B is a schematic diagram showing an example of the progress status screen.

### DETAILED DESCRIPTION OF THE PREFERRED EMBODIMENTS

Hereinafter, preferred embodiments of the invention will be described with reference to the drawings.

### [Configuration of Sample Processing System]

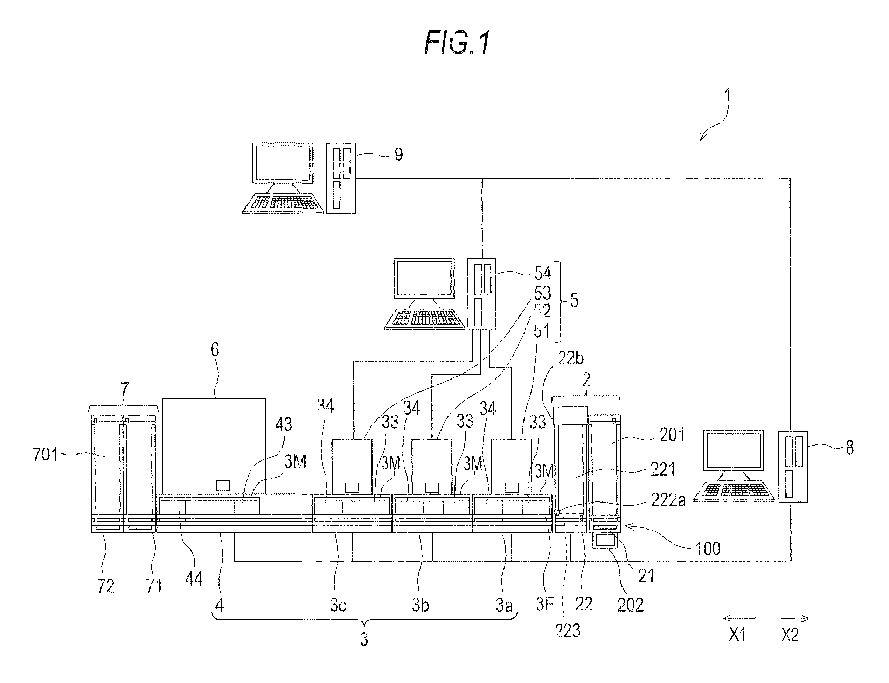

Fig. 1 is a schematic plan view showing the entire configuration of a sample processing system according to this embodiment. As shown in Fig. 1, a sample processing system 1 is provided with a sample sending device 2, a sample transport device 3, a blood cell analyzer 5, a smear preparation device 6, a sample recovery device 7, and a system control device 8. In addition, the sample processing system 1 according to this embodiment is connected to an examination information management device 9 so as to communicate therewith via a communication network. In addition, the sample sending device 2, the sample transport device 3, and the sample recovery device 7 constitute a sample transport system 100.

The sample transport device 3 has sample transport units 3a, 3b, 3c, and 4, and these sample transport units 3a, 3b, 3c, and 4 are connected to each other in series so as to extend in the lateral direction in the drawing. The blood cell analyzer 5 includes three measuring units 51, 52, and 53, and an information processing unit 54. The measuring unit 51 is disposed behind the sample transport unit 3a, the measuring unit 52 is disposed behind the sample transport unit 3b, and the measuring unit 53 is disposed behind the sample transport unit 3c. The smear preparation device 6 is disposed behind the sample transport unit 4.

In addition, the sample transport device 3 includes a transport line 3F which is linearly provided in the lateral direction over all of the sample transport units 3a, 3b, 3c, and 4 and transports a sample rack holding a plurality of samples in the leftward direction in the drawing. In addition, each of the sample transport units 3a, 3b, 3c, and 4 is provided with a measurement line 3M extending in the horizontal direction which transports a sample rack L in order to supply a sample to the measuring units 51, 52, and 53 and the smear preparation device 6. Between the transport line 3F and each of the measurement lines 3M, a before-measurement rack holder 33 and a before-process rack holder 43, which are transfer paths for transferring a sample rack to the starting point of the measurement line 3M from the transport line 3F and are areas holding a sample rack, and an after-measurement rack holder 34 and an after-process rack holder 44, which are transfer paths for transferring a sample rack to the transport line 3F from the end point of the measurement line 3M and are areas holding a sample rack, are provided.

The sample sending device 2 capable of sending a sample rack is connected to the right end of the sample transport device 3, and a sample rack which is sent by the sample sending device 2 is transported by the transport line 3F of the sample transport device 3. In addition, the sample recovery device 7 capable of recovering a sample rack is connected to the left end of the sample transport device 3. A sample rack is transferred to the measurement line 3M from the transport line 3F via the before-measurement rack holder 33 or the before-process rack holder 43 of the sample transport unit 3a, 3b, 3c or 4 corresponding to the measuring unit 51, 52 or 53 or the smear preparation device 6 which is a transport destination to be transported on the measurement line 3M, and is supplied to the measuring unit 51, 52 or 53 or the smear preparation device 6 which is a transport destination. In this embodiment, after the sample is supplied to the measuring unit 51, 52 or 53 or the smear preparation device 6, the sample rack L is transferred again to the transport line 3F from the measurement line 3M via the after-measurement rack holder 34 or the after-process rack holder 44 to be transported in the leftward direction by the transport line 3F, and is recovered by the sample recover device 7.

In addition, the sample recovery device 7 can be separated from the left end of the sample transport device 3, and can be connected to, for example, the right side of the sample sending device 2. In this manner, the arrangement of the sample recovery device 7 according to this embodiment can be changed, and it can be disposed at an appropriate position in accordance with the facility. Hereinafter, the configuration of such a sample processing system 1 will be described in detail.

### <Configuration of Sample Sending Device 2>

The sample sending device 2 is provided with a rack accommodation unit 21 and a barcode reading unit 22. In the sample sending device 2, a plurality of sample containers stored in a sample rack can be placed.

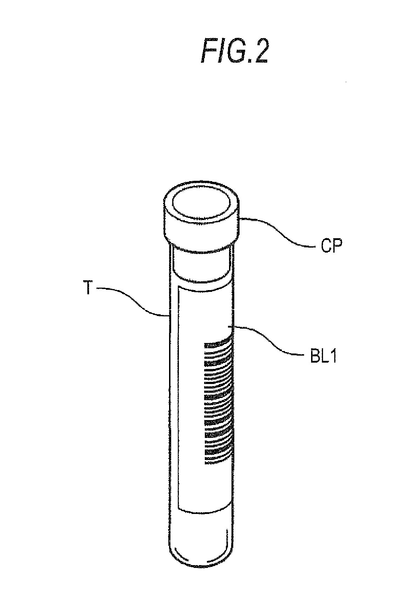

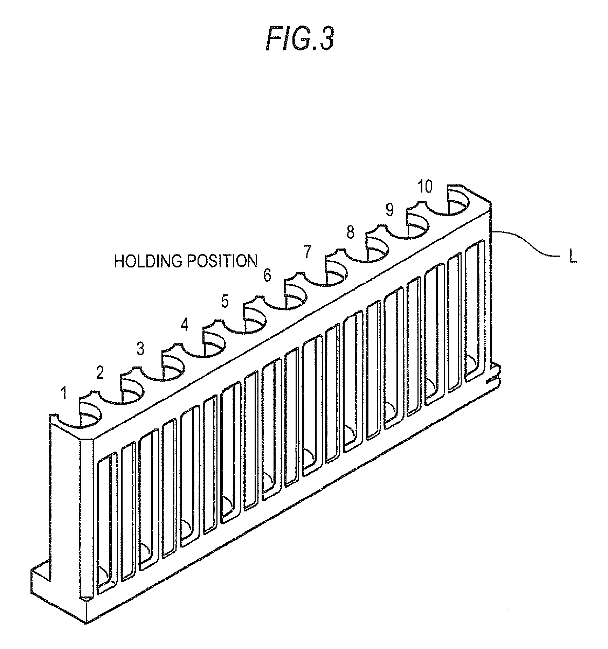

Fig. 2 is a perspective view showing the appearance of a sample container, and Fig. 3 is a perspective view showing the appearance of a sample rack. As shown in Fig. 2, a sample container T has a tubular shape and the upper end thereof is opened. A blood sample collected from a patient is contained in the sample container T, and the opening at the upper end is sealed by a cap section CP. In addition, a barcode label BL1 is adhered to a side surface of the sample container T. A barcode (sample barcode) showing a sample ID is printed on this barcode label BL1. As shown in Fig. 3, in a sample rack L, 10 sample containers T can be arranged and held. In the sample rack L, the sample containers T are held in a vertical state (erect state). In addition, a barcode label (not shown) is adhered to a side surface of the sample rack L on the side of the measuring unit between holding positions 1 and 2. A barcode (rack barcode) showing a rack ID is printed on this barcode label.

As shown in Fig. 1, the rack accommodation unit 21 has a rack accommodation section 201 having a concave shape in the upper surface thereof. This rack accommodation section 201 has a rectangular shape and can accommodate a plurality of sample racks L at the same time. A sample rack L is accommodated in the rack accommodation section 201 so that sample containers T are arranged in the lateral direction. The rack accommodation section 201 is provided with a transfer mechanism (not shown) for transferring a sample rack L, and by the transfer mechanism, a sample rack L is transferred backward on the rack accommodation section 201.

An output mechanism for outputting a sample rack to the left side is provided at a position (discharge position) on the innermost side (rear side) of the rack accommodation section 201. A sample rack which is transferred up to the discharge position by the transfer mechanism is transferred to the left side by the output mechanism, and is discharged to the barcode reading unit 22.

The rack accommodation unit 21 having such a configuration is provided with a controller (not shown) formed of a CPU, a memory and the like. This controller controls the mechanisms of the above-described rack accommodation unit 21. In addition, the rack accommodation unit 21 is provided with an Ethernet (registered trade name) interface and can be connected to other devices (information processing unit 54 and system control device 8) so as to communicate with these devices via a LAN. In addition, the rack accommodation unit 21 is provided with an operation panel 202. A user can give various instructions to the rack accommodation unit 21 by operating this operation panel 202.

The barcode reading unit 22 is connected to the left side of the rack accommodation unit 21. Such a barcode reading unit 22 is provided with a rack placement section 221 capable of accommodating a plurality of sample racks L which has a quadrangular shape in plan view. In addition, the barcode reading unit 22 is provided with a barcode reader 22b on the inside of the rack placement section 221. Such a barcode reader 22b can read out sample barcodes of a plurality of sample containers T accommodated in a sample rack L at the same time and can also read out a rack barcode of the sample rack L. Such a barcode reader 22b is provided with an optical sensor (not shown) for detecting a sample container T. When a sample rack L reaches a barcode reading position at which the barcode is read by the barcode reader 22b, whether there is a sample container T is detected by the optical sensor. In addition, the barcode reader 22b is provided with a horizontal rotating mechanism (not shown) which horizontally rotates a plurality of sample containers T at the same time immediately above the barcode readout position on the innermost side of the rack placement section 221. A sample rack L which is output from the discharge position of the rack accommodation unit 21 is transported in the leftward direction to the barcode reading unit 22, and reaches the barcode readout position. Then, while the horizontal rotating mechanism horizontally rotates a sample container T which is accommodated in the sample rack L, the barcode reader 22b reads out a sample ID from the barcode label of the sample container T and reads out a rack ID from the barcode label of the sample rack L.

The rack placement section 221 is provided with a transfer mechanism (not shown) for transferring a sample rack L, and such a transfer mechanism transfers a sample rack L, in which sample barcodes and a rack barcode are read by the barcode reader 22b, forward. An output mechanism (not shown) for discharging a sample rack to the left side is provided at a position (rack output position) 223 on the foremost side of the rack placement section 221. A sample rack which is transferred up to the rack output position 223 by the transfer mechanism is transferred to the left side and discharged from the barcode reading unit 22. The sample rack L which is output from the barcode reading unit 22 in this manner is introduced to the transport line 3F of the sample transport device 3.

In addition, a barcode reader 222a for reading a rack barcode is provided near the rack output position 223 of the barcode reading unit 22. This barcode reader 222a reads the rack ID of a sample rack L, and the read rack ID is transmitted to the system control device 8. As will be described later, the system control device 8 receives this rack ID and determines a transport destination of the sample rack L in accordance with the rack ID.

The barcode reading unit 22 having such a configuration is provided with a controller (not shown) formed of a CPU, a memory and the like. This controller controls the mechanisms of the above-described barcode reading unit 22. In addition, the barcode reading unit 22 is provided with an Ethernet (registered trade name) interface and can be connected to the information processing unit 54 and the system control device 8 so as to communicate therewith via a LAN.

### <Configuration of Sample Transport Device 3>

Next, the configuration of the sample transport device 3 will be described. As shown in Fig. 1, the sample processing system 1 is provided with the sample transport device 3 formed of the four sample transport units 3a, 3b, 3c, and 4. The sample transport units 3a, 3b and 3c are disposed ahead of the three measuring units 51, 52 and 53 of the blood cell analyzer 5, respectively. The neighboring two sample transport units among the sample transport units 3a, 3b and 3c are connected to each other to deliver and receive a sample rack L. In addition, the rightmost sample transport unit 3a is connected to the above-described sample sending device 2 and disposed so that the transport line 3F linearly continues to the rack output position 223 of the barcode reading unit 22. Accordingly, it is possible to introduce a sample rack L discharged from the sample sending device 2 to the transport line 3F.

A sample rack L which is discharged to the sample transport device 3 from the sample sending device 2 is transported in the leftward direction in the drawing by the transport line 3F. The sample transport device 3 can put the sample rack L transported on the transport line 3F temporarily on hold in the before-measurement rack holder 33 or the before-process rack holder 43 to transport the sample rack L to the measuring unit 51, 52 or 53 or the smear preparation device 6 which is a transport destination in accordance with a transport destination instruction which is given from the system control device 8, and then can transfer the sample rack L to the measurement line 3M. In addition, each of the sample transport unit 3a, 3b, 3c, and 4 can transfer the sample rack L after the supply of the sample to the measuring unit 51, 52 or 53 or the smear preparation device 6 to the after-measurement rack holder 34 or the after-process rack holder 44 from the end point of the measurement line 3M to temporarily put the sample rack L on hold in the after-measurement rack holder 34 or the after-process rack holder 44, and then can transfer the sample rack L to the transport line 3F. The sample rack L transferred to the transport line 3F is transported to the downstream side (left side) in the transport direction along the transport line 3F.

That is, the transport path of the sample rack L in the sample transport device 3 branches to the before-measurement rack holder 33 (or before-process rack holder 44) and to the transport line 3F at a position in front of the before-measurement rack holder 33 (or before-process rack holder 44) in the transport line 3F. As will be described later, in the case of an initial examination, the transport destination of a sample rack L is determined while the sample rack L is stopped at the rack output position 223 of the barcode reading unit 22. That is, the transport destination of a sample rack L is determined before the sample rack L reaches the branch point of the transport path in the sample transport unit 3a on the uppermost-stream side in the transport direction. For example, when the transport destination of a sample rack L is the measuring unit 51, the sample rack L is transferred to the before-measurement rack holder 33 from the branch point of the sample transport unit 3a. When the transport destination of the sample rack L is the measuring unit 52 or 53 or the smear preparation device 6, the sample rack L is transported to the downstream side in the transport direction of the transport line 3F from the branch point of the sample transport unit 3a.

In addition, when an additional sample measurement is performed after the initial examination, the sample rack L is stopped at an end position of the transport line 3F of the sample transport unit corresponding to the measuring unit in which the initial examination has been performed, and the next transport destination is determined on the basis of an additional measurement order during that time. For example, when an additional measurement order for the sample subjected to the initial examination in the measuring unit 51 is generated, the system control device inquires about an additional measurement order and determines the next transport destination while the sample rack L is positioned at the end position of the transport line 3F of the sample transport unit 3a. That is, a transport destination of the sample rack is determined before the sample rack L reaches a branch point of the sample transport unit 3b which is the next branch point of the measuring unit 51 which has performed the initial examination. Here, when the next transport destination is the measuring unit 52, the sample rack L is introduced to the sample transport unit 3b, and transferred to the before-measurement rack holder 33 at the branch point. When the next transport destination is the measuring unit 53 or the smear preparation device 6, the sample rack L is transported to the downstream side of the transport line 3F from the branch point of the sample transport unit 3b.

### <Configuration of Blood Cell analyzer 5>

The blood cell analyzer 5 is an optical flow cytometry type multiple blood cell analyzer. It acquires the scattered light intensity, the fluorescence intensity and the like with respect to blood cells included in a blood sample, classifies blood cells included in the sample on the basis of the above acquired results, and counts the number of blood cells for each kind. In addition, the blood cell analyzer 5 creates and displays a scattergram in which the blood cells classified in this manner are colored in different colors for each kind. Such a blood cell analyzer 5 is configured to have the measuring units 51, 52 and 53 which measure a blood sample and the information processing unit 54 which processes measurement data output from the measuring units 51, 52 and 53 and displays a blood sample analysis result.

As shown in Fig. 1, the blood cell analyzer 5 is provided with the three measuring units 51, 52 and 53 and the one information processing unit 54. The information processing unit 54 is connected to the three measuring units 51, 52 and 53 so as to communicate therewith and can control the operations of these three measuring units 51, 52 and 53. In addition, the information processing unit 54 is connected to the three sample transport units 3a, 3b and 3c which are disposed ahead of the three measuring units 51, 52 and 53, respectively, so as to communicate therewith.

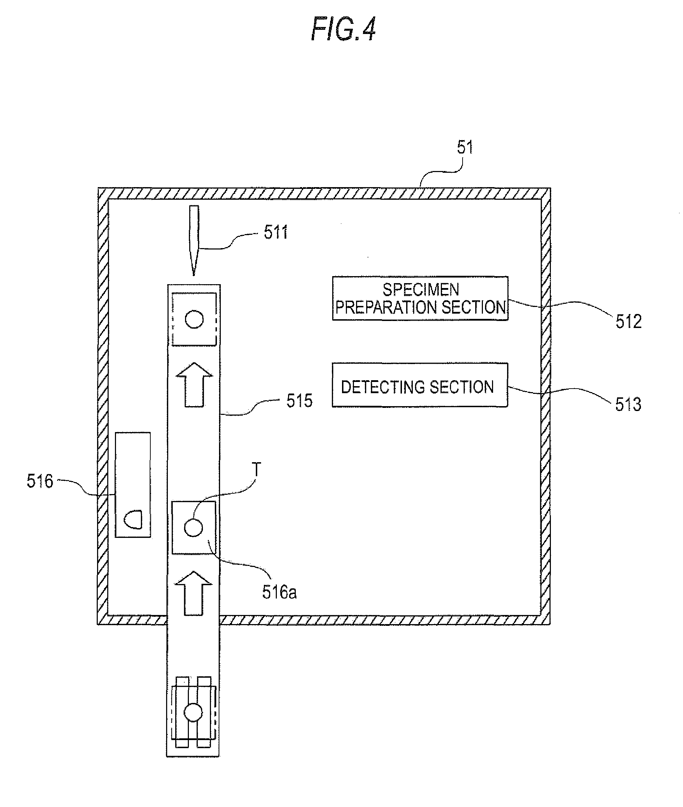

Fig. 4 is a block diagram showing the configuration of the measuring unit 51. As shown in Fig. 4, the measuring unit 51 has a sample suction section 511 suctioning blood which is a sample from a sample container (blood collection tube) T, a specimen preparation section 512 preparing a measurement specimen which is used in the measurement from the blood suctioned by the sample suction section 511, and a detecting section 513 detecting blood cells from the measurement specimen which is prepared by the specimen preparation section 512. In addition, the measuring unit 51 further has an intake port (not shown) for taking a sample container T which is accommodated in a sample rack L transported by the measurement line 3M of the sample transport unit 3a into the measuring unit 51, a sample container transport section 515 which takes the sample container T from the sample rack L into the measuring unit 51 and transports the sample container T up to a suction position at which the suction is performed by the sample suction section 511, and a barcode reader 516 which reads a sample ID from the barcode of the sample container T taken into the measuring unit 51.

The detecting section 513 can perform RBC (red blood cell) detection and PLT (platelet) detection by a sheath flow DC detection method. In addition, the detecting section 513 is configured to be able to perform HGB (hemoglobin) detection by a SLS-hemoglobin method and perform WBC (white blood cell) detection by a flow cytometry method using a semiconductor laser. The measurement items RBC, PLT, HGB and WBC are included in the measurement item "CBC". That is, when an instruction is issued to perform the CBC measurement by a measurement order, the sample measurement is performed with respect to the items RBC, PLT, HGB and WBC.

In addition, the detecting section 513 can perform the measurement of white blood cell classification (measurement item "DIFF") by a flow cytometry method using a semiconductor laser. In the white blood cell classification measurement, a reagent for white blood cell classification is mixed with a sample. This specimen which is a mixture is supplied to a flow cytometer, and optical information (side-scattered light, forward-scattered light, fluorescence) which is generated when the blood cells included in the specimen are irradiated with light is detected. This optical information is output to the information processing unit 54. The information processing unit performs data processing, and thus classifies the white blood cells in the sample into five sub-classes (NEUT (neutrophils), LYMPH (lymphocytes), EO (eosinophiles), BASO (basophils) and MONO (monocytes)), and counts the number of the white blood cells for each sub-class.

The measuring unit 52 has the same configuration as the measuring unit 51, and is provided with a sample suction section, a specimen preparation section, a detecting section, and a sample container transport section.

The measuring unit 53 can measure RET (reticulocytes) in addition to the above-described CBC and DIFF by a flow cytometry method using a semiconductor laser. Such a measuring unit 53 has the same configuration as the measuring unit 51, except that the RET measurement is possible, and is provided with a sample suction section, a specimen preparation section, a detecting section, and a sample container transport section.

### <Configuration of Smear Preparation Device 6>

The smear preparation device 6 suctions and drops a blood sample onto a glass slide, and thinly extends and dries the blood sample on the glass slide. Then, the smear preparation device 6 supplies a dyeing solution to the glass slide to dye the blood on the glass slide, thereby preparing a smear.

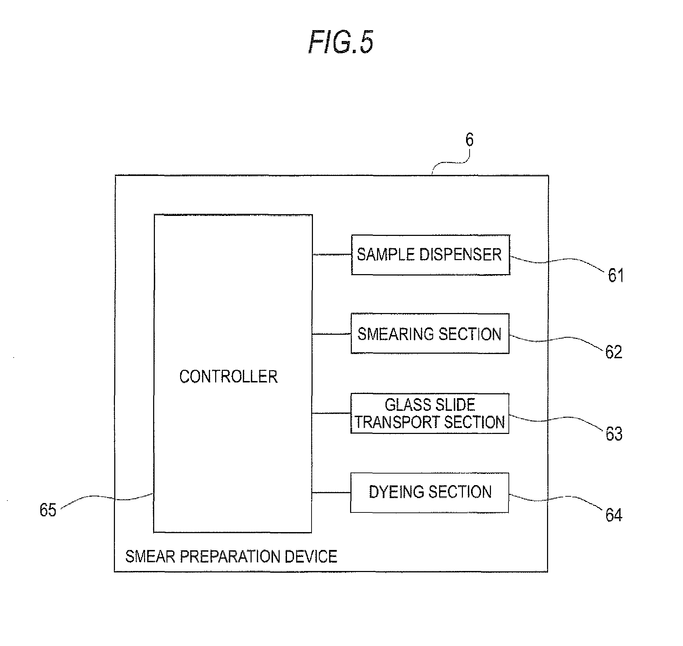

Fig. 5 is a block diagram showing the schematic configuration of the smear preparation device 6. As shown in Fig. 5, the smear preparation device 6 is provided with a sample dispenser 61, a smearing section 62, a glass slide transport section 63, a dyeing section 64 and a controller 65.

The specimen dispenser 61 is provided with a suction tube (not shown). This suction tube pierces a cap section CP of a sample container T in a sample rack L transported on the measurement line 3M of the sample transport unit 4 to suction a blood specimen from this sample container T. In addition, the sample dispenser 61 is configured to drop the suctioned blood specimen onto a glass slide. The smearing section 62 is configured to smear and dry the blood sample dropped onto the glass slide and print it on the glass slide.

The glass slide transport section 63 is provided to accommodate the glass slide on which the blood specimen has been smeared by the smearing section 62 in a cassette (not shown) and to transport the cassette. The dyeing section 64 supplies a dyeing solution to the glass slide in the cassette which is transported to a dyeing position by the glass slide transport section 63. The controller 65 controls the sample dispenser 61, the smearing section 62, the glass slide transport section 63 and the dyeing section 64 in accordance with a measurement order which is given from the examination information management device 9, and executes the above-described smear preparation operation.

When an instruction is given to prepare a smear by the smear preparation device 6, the measurement item "SP" is designated in a measurement order to be described later. That is, when a measurement order which includes the measurement item "SP" with respect to a sample is given to the sample processing system 1, the smear preparation device 6 prepares a smear of the sample. The smear preparation device 6 prepares a smear of a sample, but does not measure the sample. In this embodiment, for the sake of convenience, a process order for the smear preparation device 6 is expressed by a measurement order.

### <Configuration of Sample Recovery Device 7>

The sample recovery device 7 is configured to place a plurality of sample racks L therein. Such a sample recovery device 7 is configured to connect two rack accommodation units 71 and 72. The rack accommodation units 71 and 72 have the same configuration as the above-described rack accommodation unit 21 of the sample sending device 2, and have a rack accommodation section 701 and belt conveyors which are provided ahead and behind the rack accommodation section 701, respectively. The rack accommodation unit 71 is connected to the left end of the sample transport unit 4 and disposed so that the belt conveyor on the front side linearly continues to the transport line 3F of the sample transport unit 4. In addition, the rack accommodation units 71 and 72 are connected to each other and disposed so that the belt conveyors on the rear side linearly continue to each other. Accordingly, the sample recovery device 7 receives and accommodates a sample rack L accommodating a sample subjected to the analysis or the preparation of a smear from the transport line 3F of the sample transport device 3.

### <Configuration of System Control Device 8>

The system control device 8 is constituted of a computer and controls the entire sample processing system 1. This system control device 8 receives a rack ID and a sample ID from the sample sending device 2, and inquires of the examination information management device 9 about a measurement order with the rack ID and the sample ID. In addition, the system control device 8 determines the transport destination of a sample rack L and transmits a transport command showing the transport destination to the sample transport device 3.

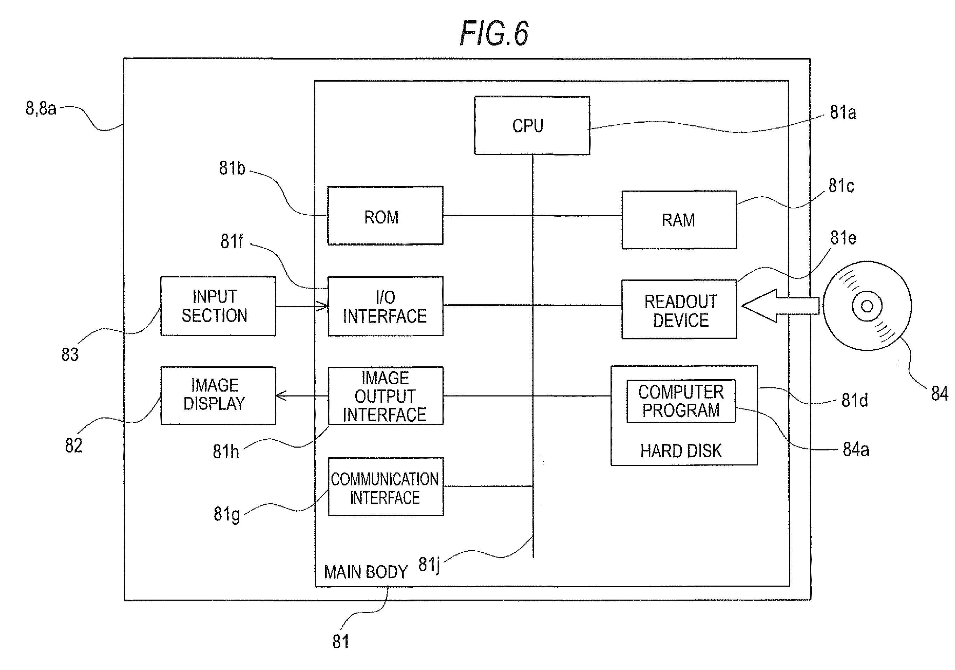

Fig. 6 is a block diagram showing the configuration of the system control device 8 according to this embodiment. The system control device 8 is realized by a computer 8a. As shown in Fig. 6, the computer 8a is provided with a main body 81, an image display 82, and an input section 83. The main body 81 is provided with a CPU 81a, a ROM 81b, a RAM 81c, a hard disk 81d, a readout device 81e, an I/O interface 81f, a communication interface 81g and an image output interface 81h. The CPU 81a, the ROM 81b, the RAM 81c, the hard disk 81d, the readout device 81e, the I/O interface 81f, the communication interface 81g and the image output interface 81h are connected to each other by a bus 81j.

The readout device 81e reads out from a portable recording medium 84 a system control program 84a for allowing the computer to function as the system control device 8, and can install the system control program 84a on the hard disk 81d.

The communication interface 81g is an Ethernet (registered trade name) interface, and is connected to each of the sample sending device 2, the sample transport device 3, the blood cell analyzer 5, the smear preparation device 6, the sample recovery device 7, and the examination information management device 9 so as to communicate therewith.

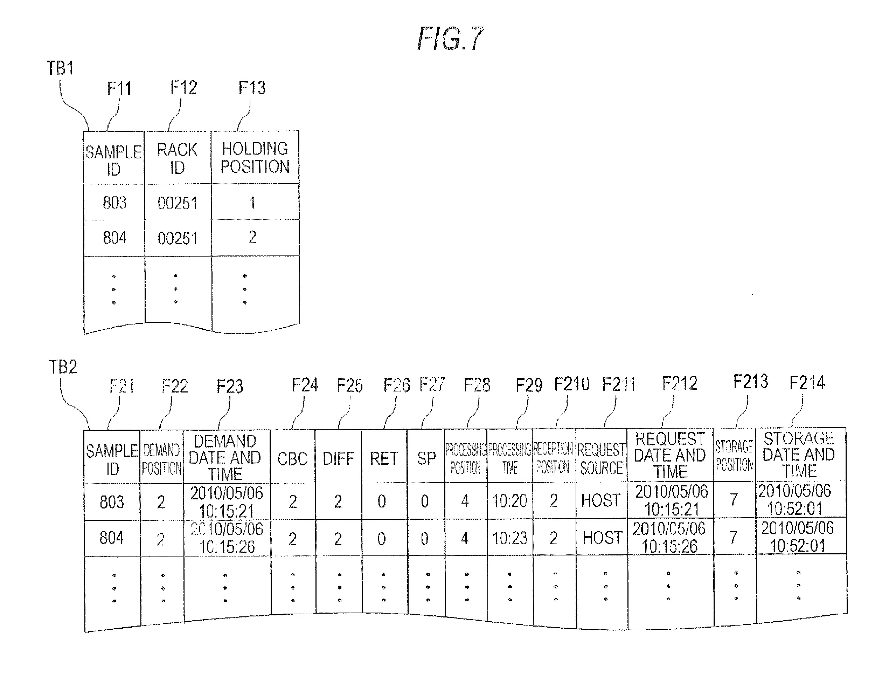

The hard disk 81d is provided with a sample processing progress database. Fig. 7 is a schematic diagram showing the structure of the sample processing progress database. A sample processing progress database DB is a relational database, and has a sample information table TB1 for storing sample information and a progress status table TB2 for storing data showing a progress status of processing with respect to each measurement order. In the sample information table TB1, information related to a sample is stored in each record. In greater detail, the sample information table TB1 is provided with a field F11 for storing a sample ID, a field F12 for storing a rack ID, and a field F13 for storing a holding position number in a sample rack L.

As shown in Fig. 7, sample IDs such as "803" and "804" are stored in the field F11 of the sample information table TB1, rack IDs such as "00251" are stored in the field F12, and holding position numbers such as "1" and "2" are stored in the field F13.

In the progress status table TB2, information related to a measurement order for a sample and a progress of sample processing based on the measurement order is stored in each record. In greater detail, the progress status table TB2 is provided with a field F21 for storing a sample ID, a field F22 for storing demand position information indicating the position (demand position) of a sample rack L when there is a demand for a measurement order from the system control device 8, a field F23 for storing demand date and time information indicating a date and a time at which there is a demand for a measurement order from the system control device 8, fields F24 to F27 for storing information indicating the presence or absence of a measurement order with respect to items CBC, DIFF, RET and SP, the presence or absence of a processing result, and the presence or absence of a cancel of a measurement order, a field F28 for storing processing position information indicating a processing position (unit executing the process) when sample processing is performed, a field F29 for storing processing time information indicating a time at which sample processing is performed, a field F210 for storing reception position information indicating the position of a sample on the transport path when the system control device 8 receives a measurement order, a field F211 for storing request source information indicating a measurement order transmission source, that is, a measurement request source, a field F212 for storing a date and a time at which a measurement order is transmitted from a transmission source, that is, request date and time information indicating a date and a time at which the measurement is requested, a field F213 for storing storage position information indicating a storage position (unit accommodating a sample) when the sample is stored (accommodated) in the sample recovery device 7, and a field F214 for storing storage date and time information indicating a date and a time at which a sample is accommodated in the sample recovery device 7.

As shown in Fig. 7, sample IDs such as "803" and "804" are stored in the field F21 of the progress status table TB2, position information of sample racks such as "2" is stored in the field F22, and demand date and time information such as "2010/05/06 10:15:21" is stored in the field F23. In addition, state data indicating the presence or absence of a measurement order, the presence or absence of a processing result, and the presence or absence of a cancel of a measurement order is stored in the fields F24 to F27. The state data is any of "0", "1", "2", and "3". "0" indicates that there is no measurement data, "1" indicates that there is a measurement order, but there is no processing result (that is, unprocessed), "2" indicates that there is a processing result (that is, processed), and "3" indicates a cancel of a measurement order. Processing position information such as "3", "4", "5", and "6" is stored in the field F28, and processing time information such as "10:20", "10:31", and "10:43" is stored in the field F29. Reception position information such as "2", "4", and "5" is stored in the field F210, and request source information such as "HOST" is stored in the field F211. The request source information is any data of "HOST" and "IPU". "HOST" indicates the examination information management device 9, and "IPU" indicates the information processing unit 54. Request date and time information such as "2010/05/06 10:15:21" is stored in the field F212, storage position information of a sample rack such as "7" is stored in the field F213, and storage date and time information such as "2010/05/06 10:52:01" is stored in the field F214. In addition, the position information stored in the fields F22, F28, F210, and F213 shows a position on the transport path of the sample processing system 1, and the position number of the unit to be described later is used.

### <Configuration of Examination Information Management Device 9>

The examination information management device 9 is a device which manages the information related to the examinations in the facility, that is, a so-called Laboratory Information System (LIS). The examination information management device 9 is connected not only to the blood cell analyzer 5, but also to other clinical sample examination devices. Such an examination information management device 9 receives a measurement order which is input from an operator or transmitted from other devices such as an electronic health record system, and stores and manages the measurement order. Furthermore, the examination information management device 9 receives an order demand from the system control device 8 or the blood cell analyzer 5, and transmits the demanded measurement order to the system control device 8 or the blood cell analyzer 5. In addition, the examination information management device 9 receives an analysis result from the blood cell analyzer 5 and stores and manages the analysis result.

The examination information management device 9 is constituted of a computer and is provided with a CPU, a ROM, a RAM, a hard disk, a communication interface and the like. The communication interface is connected to the above-described LAN and can communicate with the system control device 8 and the information processing unit 54 of the blood cell analyzer 5. In addition, measurement orders are stored on the hard disk. Measurement orders include a sample ID and information on measurement items of a target. The examination information management device 9 is configured to, when receiving demand data for a measurement order including a sample ID from other devices, read out measurement data corresponding to this sample ID from the hard disk and transmit the measurement data to the device which is a demand source. With regard to other points, the configuration of the examination information management device 9 is the same as the configuration of the above-described other computers, and thus the description thereof will be omitted.

### <Arrangement of Sample Processing System 1>

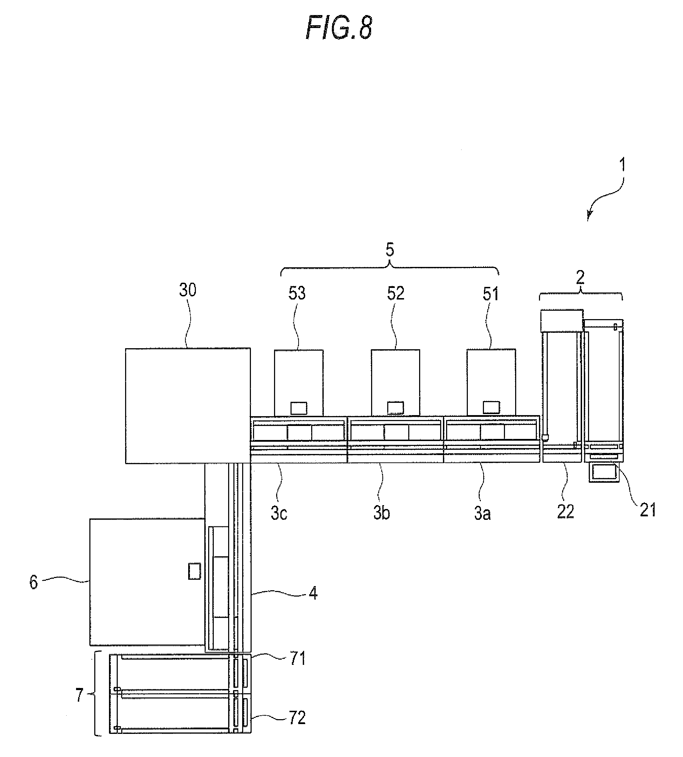

In the sample processing system 1 having the above-described configuration, the constituent elements, that is, the rack accommodation unit 21, the barcode reading unit 22, the sample transport units 3a, 3b, 3c, and 4, the measuring units 51, 52, and 53, the smear preparation device 6, and the rack accommodation units 71 and 72 can be separated from or connected to each other. These can also be arranged in a manner different from that shown in Fig. 1. Fig. 8 is a plan view showing another arrangement example of the sample processing system. In the example shown in Fig. 8, a relay unit 30 which shifts the transport direction of a sample rack L by 90° is provided between the sample transport unit 3c and the sample transport unit 4, and the arrangement of other units is the same as in Fig. 1. In this manner, in the sample processing system 1 according to this embodiment, a user can freely determine the arrangement of the units in accordance with the configuration of the installed facility.

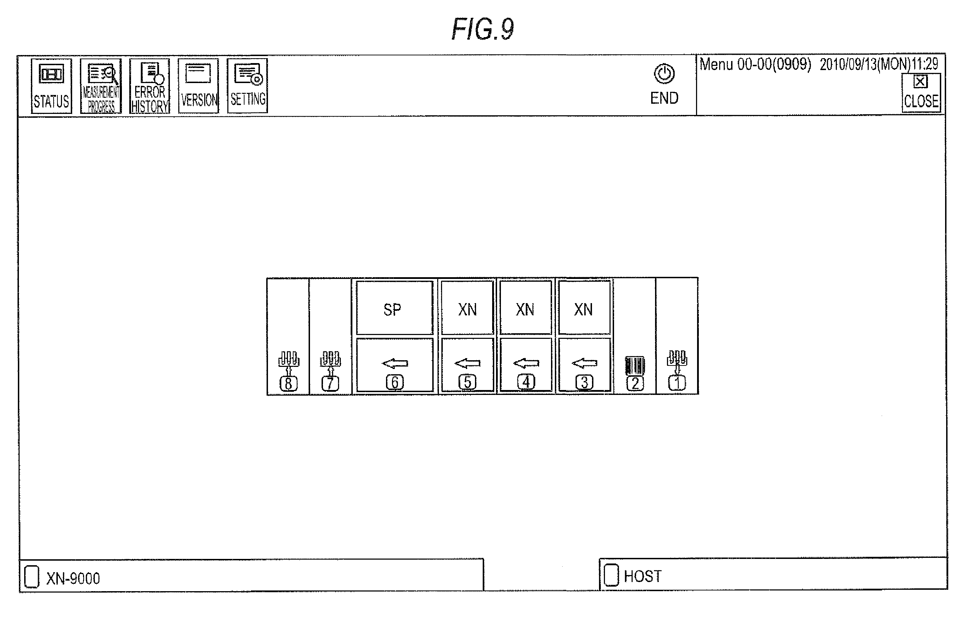

The system control device 8 stores the arrangement of the units of the sample processing system on the hard disk 81d. The information indicating this arrangement of the sample processing system 1 is set by a serviceman or a user when the sample processing system 1 is introduced. In addition, the system control device 8 can display a layout view showing the set arrangement of the sample processing system on the image display 82. Fig. 9 is a diagram showing an example of the display of a layout view of the sample processing system. In the example shown in Fig. 9, a layout view when the units of the sample processing system 1 are disposed as in Fig. 1 is shown. As shown in Fig. 9, in a layout screen D1, figures representing the rack accommodation unit 21 of the sample processing system 1, the barcode reading unit 22, the sample transport units 3a, 3b, 3c, and 4, the measuring units 51, 52, and 53, the smear preparation device 6, and the rack accommodation units 71 and 72 are drawn with the same positional relationship as the positional relationship of the actual arrangement. Corresponding position numbers are displayed on the units which transport the sample, that is, the rack accommodation unit 21, the barcode reading unit 22, the sample transport units 3a, 3b, 3c, and 4, and the rack accommodation units 71 and 72, respectively. That is, the position number "1" is displayed on the figure for the rack accommodation unit 21, the position number "2" is displayed on the figure for the barcode reading unit 22, the position number "3" is displayed on the figure for the sample transport unit 3a, the position number "4" is displayed on the figure for the sample transport unit 3b, the position number "5" is displayed on the figure for the sample transport unit 3c, the position number "6" is displayed on the figure for the sample transport unit 4, the position number "7" is displayed on the figure for the rack accommodation unit 71, and the position number "8" is displayed on the figure for the rack accommodation unit 72. These position numbers "1" to "8" show the procedure of the transport of a sample rack L on the transport path. These position numbers are stored on the hard disk 81d of the system control device 8 in association with the device IDs (information specifying the unit such as a serial number) of the units. That is, for example, the device ID and the position number "1" of the rack accommodation unit 21 are stored in association with each other, and the device ID and the position number "2" of the barcode reading unit 22 are stored in association with each other. In addition, in the layout view, the model name "XN" of the blood cell analyzer 5 is displayed on the figures for the measuring units 51, 52, and 53, and the model name "SP" of the smear preparation device 6 is displayed on the figure for the smear preparation device 6.

### [Operation of Sample Processing System]

Next, operations of the sample processing system according to this embodiment will be described.

### [Sample Processing Operation]

First, a sample processing operation of transporting and processing (measurement or preparation of a smear) a sample by the sample processing system 1 will be described.

### <Measurement Order Acquiring Process>

An operator places a sample rack L accommodating sample containers T in the rack accommodation unit 21, and operates the operation panel of the rack accommodation unit 21 to give a processing start instruction to the sample processing system 1. The controller of the sample sending device 2 receives such a processing start instruction, and thus starts the transfer of the sample rack L. The sample rack L placed in the rack accommodation unit 21 is transferred backward on the rack accommodation unit 21. Then, the sample rack L is transferred in the leftward direction and delivered to the barcode reading unit 22.

The sample rack L introduced to the barcode reading unit 22 is transferred in the leftward direction on the transport path. The rack barcode of the sample rack L and the sample barcodes of the sample containers T are read by the barcode reader. Here, the information showing the read rack ID and sample IDs and the current position of the rack, that is, the ID information including the position information indicating the barcode reading unit 22 is transmitted to the system control device 8. Next, the sample rack L is transferred on the barcode reading unit 22, and reaches the rack output position 223. Then, the rack ID is read out from the rack barcode of the sample rack L by the barcode reader 222a. The sample sending device 2 transmits discharge demand data including the rack ID to the system control device 8, and waits for discharge instruction data to be transmitted from the system control device 8. When receiving the discharge instruction data from the system control device 8, the sample sending device 2 discharges the sample rack L to the adjacent sample transport device 3.

Next, a measurement order acquiring process of the system control device 8 will be described.

The system control device 8 receives ID information from the sample sending device 2, and inquires of the examination information management device 9 about a measurement order with a sample ID included in this ID information as a key. Here, the measurement order is data showing an instruction for analysis items to be analyzed with regard to the sample. Attribute information of the sample such as a sample ID, a patient ID and a patient name, and information of the measurement items are included therein. Hereinafter, this operation will be described in detail.

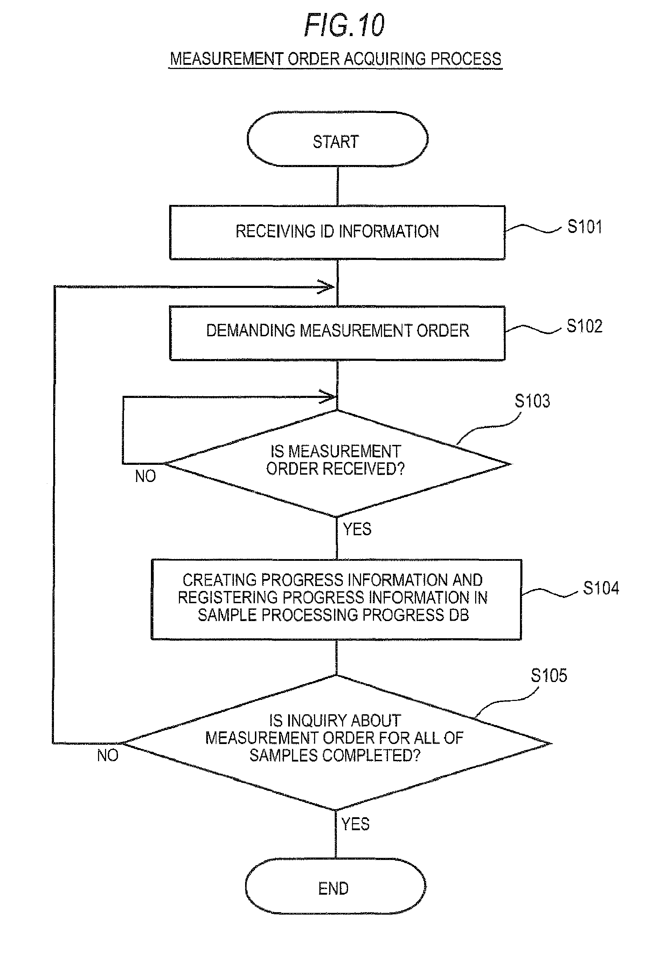

Fig. 10 is a flowchart showing the procedure of the measurement order acquiring process of the system control device 8. As described above, the sample sending device 2 transmits ID information which includes the sample IDs and rack ID read out by the barcode reader, the holding position numbers indicating the holding positions of the samples in the sample rack, and the position information (unit ID of the barcode reading unit 22) to the system control device 8. Such ID information is received by the communication interface 81g of the system control device 8 (Step S101). In the CPU 81a, when an event of receiving the ID information occurs, a process of Step S102 is invoked.

In Step S102, the CPU 81a transmits order demand data including one of the received sample IDs to the examination information management device 9, and demands a measurement order corresponding to the sample ID from the examination information management device 9 (Step S102). The CPU 81a waits for the reception of the measurement order (NO in Step S103), and when the measurement order which is transmitted from the examination information management device 9 is received by the system control device 8 (YES in Step S103), the CPU 81a creates progress information of the sample processing on the basis of the received measurement order, and stores the progress information in the sample processing progress database DB (Step S104).

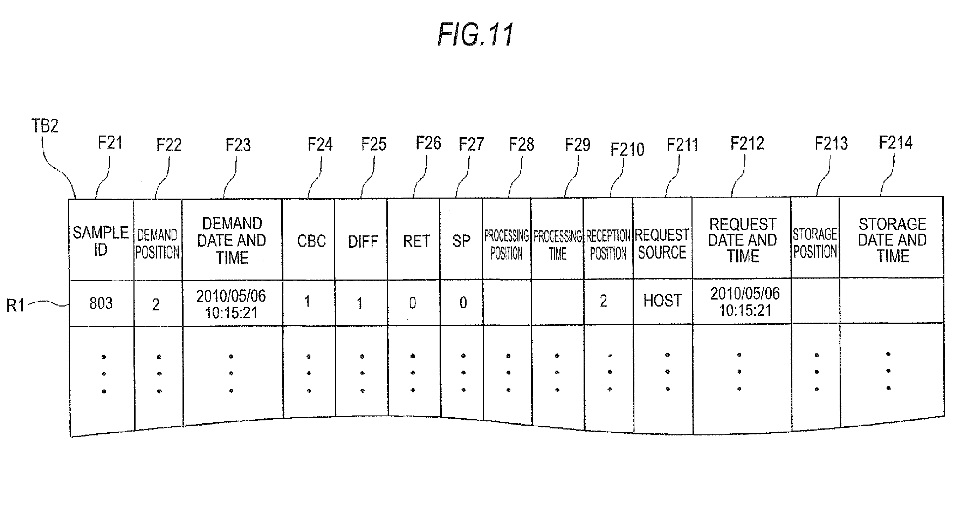

In the process of Step S104, the sample ID included in the received measurement order, the rack ID included in the received ID information, and the holding position number corresponding to the sample ID are stored in the sample information table TB1. The sample ID included in the received measurement order, the demand date and time information indicating the date and time at which the system control device 8 demands the measurement order from the examination information management device 9, the presence or absence of the designation of the measurement items in the received measurement order, the reception position information indicating the position of the sample when the measurement order is received, the transmission source of the measurement order, that is, the request source information indicating the measurement request source, and the request date and time information indicating the date and time at which the measurement order is received, that is, the date and time at which the measurement is requested are stored in the progress status table TB2. Fig. 11 is a schematic diagram showing an example of the progress status table TB2 in which progress information is registered. The example of Fig. 11 shows a state of the progress status table TB2 when the measurement items CBC and DIFF are designated, but the measurement items RET and SP are not designated in the received measurement order. As shown in the drawing, in this case, "1" is stored in each of the fields F24 and F25 of the progress status table TB2, and "0" is stored in each of the fields F26 and F27. In addition, at this time, since the sample processing is not performed for any of the measurement items, no data is stored in each of the fields F28 and F29. Furthermore, since the unit ID of the barcode reading unit 22 is included as position information in the ID information received in Step S101, the position number "2" of the barcode reading unit 22 is stored in the field F210. In addition, since this measurement order is transmitted from the examination information management device 9, "HOST" indicating the examination information management device which is a transmission source is stored in the field F211, and the request date and time information "2010/05/06 10:15:21" is stored in the field F212. Furthermore, at this time, since the sample is not stored in the sample recovery device 7, no data is stored in each of the fields F213 and F214.

Next, the CPU 81a determines whether the inquiry about the measurement order has been completed with respect to the sample IDs corresponding to the rack ID, that is, the sample IDs of all of the samples which are accommodated in the sample rack L (Step S105), and when there is a sample ID which is not subjected to the inquiry about the measurement order (NO in Step S105), the process returns to Step S102 to demand a measurement order corresponding to the sample ID which is not subjected to the inquiry about the measurement order from the examination information management device 9.

On the other hand, when the inquiry about the measurement order is complete with respect to all of the sample IDs (YES in Step S105), the CPU 81a ends the process.

### <Transport Control Process>

As described above, the rack ID is read out by the barcode reader 222a from the rack barcode of the sample rack L reaching the rack output position 223, and then the sample sending device 2 transmits discharge demand data including the rack ID to the system control device 8. The system control device 8 receiving the discharge demand data from the sample sending device 2 determines a transport destination of the sample rack L by using the rack ID which is included in this discharge demand data, and issues an instruction to transport the sample rack L to each device so as to transport the sample rack L to the determined transport destination. This operation is explained below in detail.

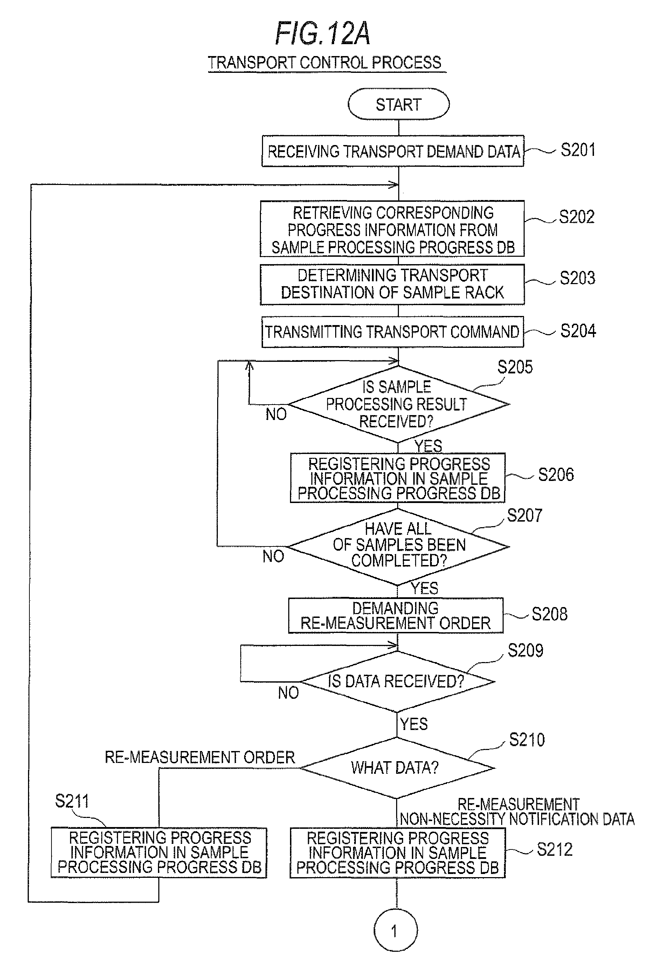

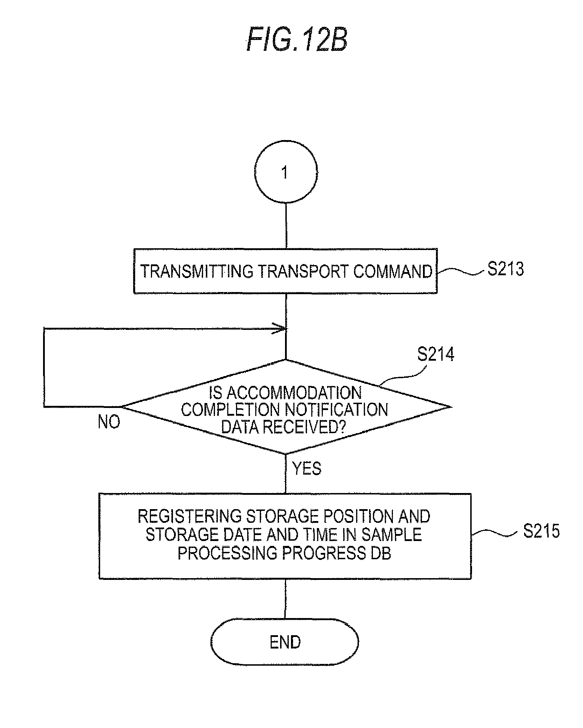

Figs. 12A and 12B are flowcharts showing the procedure of the transport control process of the system control device 8. The discharge demand data which is transmitted from the sample sending device 2 is received by the communication interface 81g of the system control device 8 (Step S201). In the CPU 81a, when an event of receiving the discharge demand data occurs, a process of Step S202 is invoked.

In Step S202, the CPU 81a retrieves progress information of the sample processing progress database DB with the rack ID which is included in the received discharge demand data as a key (Step S202). As described above, this progress information includes state data (data indicating the presence or absence of a measurement order, the presence or absence of a processing result, and the presence or absence of a cancel of a measurement order) of each measurement item. The CPU 81a determines the transport destination of this sample rack L on the basis of the state data of each measurement item in each of the retrieved progress information (Step S203).

The process of Step S203 will be described. When the measurement item CBC or DIFF is designated and the measurement items RET and SP are not designated in the measurement orders for all of the samples which are held in the sample rack L, all of the samples which are held in the sample rack L can be measured in the measuring unit 51 or 52. Therefore, in such a case, the measuring unit 51 or 52 is determined as a transport destination. When any of CBC and DIFF, and SP are designated as a measurement item, and RET is not designated, the sample measurement with respect to CBC and DIFF can be performed in the measuring unit 51 or 52, and a smear can be prepared in the smear preparation device. That is, in this case, the sample rack L is transported to the measuring unit 51 or 52, the sample measurement with respect to CBC and DIFF is performed, and then the sample rack L is transported to the smear preparation device 6 to prepare a smear. Therefore, also in such a case, the measuring unit 51 or 52 is determined as a transport destination. On the other hand, when the measurement item RET is designated in a measurement order for any of the samples which are held in the sample rack L, the measuring unit 53 is determined as a transport destination because only the measuring unit 53 can measure the sample with respect to RET.

Next, the CPU 81a transmits a transport command to transport the sample rack L to the determined transport destination (Step S204). In this process, when the sample rack L is present on the barcode reading unit 22, and any of the measuring units 51, 52, and 53, or the smear preparation device 6 is designated as a transport destination, the CPU 81a transmits to the sample sending device 2 a command to issue an instruction in order to discharge the sample rack L to the sample transport device 3, and transmits to the sample transport device 3 a command to issue an instruction in order to transport the sample rack L to the measuring unit 51, 52, or 53, or the smear preparation device 6. The sample sending device 2 and the sample transport device 3 transport the sample rack L up to the transport destination in accordance with the transport command.

Here, operations of the blood cell analyzer 5 when the sample rack L is transported to the measuring unit 51 will be described. After the sample rack L is transported up to the measurement line 3M of the sample transport unit 3a, the sample container transport section 515 takes a sample container T out of the sample rack L by the control of the CPU of the information processing unit 54. The sample container T is oscillated to stir the sample therein. The CPU of the information processing unit 54 controls the sample container transport section 515 to transport the sample container T to a barcode reading position 516a, and reads the sample barcode of the sample container T by the barcode reader 516 to acquire a sample ID. Furthermore, the CPU transmits order demand data including the sample ID to the examination information management device 9 via the communication interface (not shown), and inquires about a measurement order. Then, the CPU waits for the reception of the measurement order, and when the measurement order which is transmitted from the examination information management device 9 is received by the communication interface of the information processing unit 54, the CPU stores the received measurement order on the hard disk (not shown).

The CPU of the information processing unit 54 controls the sample container transport section 515 to transport the sample container T to the suction position, and controls the sample suction section 511 to suction the sample in an amount necessary for the measurement item which is included in the stored measurement order from the sample container T. After the suction of the sample, the CPU controls the sample container transport section 515 to return the sample container T to the sample rack L.

In addition, the CPU of the information processing unit 54 controls the specimen preparation section 512 to prepare a measurement specimen in accordance with the measurement item, and supplies the measurement specimen to the detecting section 513 to measure the sampled by the detecting section 513. Accordingly, the CPU acquires a measurement data which is output from the detecting section 513. The CPU executes a measurement data analysis process, classifies blood cells included in the sample, counts the number of blood cells for each kind, and creates a scattergram in which the blood cells classified in this manner are colored in different colors for each kind. Measurement result data which is generated by the measurement data analysis process is stored on the hard disk with the patient information and the like which are included in the measurement order, and transmitted to each of the system control device 8 and the examination information management device 9. The blood cell analyzer 5 sequentially executes such a sample measurement operation with respect to each of the samples which are held in the sample rack L.

In addition, the CPU of the information processing unit 54 determines whether an additional measurement for the sample is needed on the basis of the measurement result which is generated as described above, and when it is needed, the CPU determines a measurement item for the additional measurement target. The additional measurement includes the re-examination for measuring the sample again with respect to the same measurement item as the measurement item in the initial sample measurement, and the reflect examination for measuring the sample with respect to a measurement item including a measurement item different from the measurement item in the initial sample measurement. For example, in the case of a sample subjected to the measurement with respect to CBC and DIFF, when the measurement result of a predetermined item deviates from a predetermined standard, RET or SP is determined as an additional measurement item. When the additional measurement item is determined as described above, the CPU generates and stores a measurement order (hereinafter, referred to as "additional measurement order") including the additional measurement item on the hard disk. In addition, the additional measurement order generated in this manner is transmitted with the measurement result when the measurement result is transmitted to the system control device 8.

In addition, after the system control device 8 inquires the measurement order from the examination information management device 9, the measurement order of the examination information management device 9 may be changed. For example, in the examination information management device 9, when a measurement order is registered in which the measurement items CBC, DIFF, and SP are designated with respect to a sample, the measurement items CBC, DIFF, and SP are designated with respect to this sample in the measurement order which is received from the examination information management device 9 by the system control device 8. When the transport destination of this sample is determined as the measuring unit 52, and a sample container T containing the sample is taken into the measuring unit 52, the barcode reader 516 reads out a sample ID from the sample barcode of this sample container T, and the information processing unit 54 again inquires about a measurement order for the sample. When the measurement items of the measurement order have a change in which "SP" is deleted therefrom before the information processing unit 54 inquires about a measurement order, the measurement items designated in the measurement order which is received by the information processing unit 54 are "CBC" and "DIFF". In accordance with this measurement order, the measuring unit 51 executes the sample measurement with respect to the measurement items "CBC" and "DIFF", and the sample measurement result with respect to the measurement items "CBC" and "DIFF" is transmitted to the system control device 8 by the information processing unit 54. In addition to such a measurement result, the information processing unit 54 transmits data (hereinafter, referred to as "change notification data") notifying of the content of the change in the measurement order to the system control device 8.

When the measuring unit 52 or 53 is designated as a transport destination, the process is carried out in the above-described manner, the description thereof will be omitted.

Next, operations of the smear preparation device 6 when the sample rack L is transported to the smear preparation device 6 will be described. After the transport of the sample rack L up to the measurement line 3M of the sample transport unit 4, the barcode reader (not shown) provided in this sample transport unit 4 reads a sample ID from the barcode of a sample container T held in the sample rack L. This sample ID is transmitted to the smear preparation device 6 from the sample transport unit 4, and the smear preparation device 6 transmits order demand data including the sample ID to the examination information management device 9, and inquires about a measurement order. Then, the controller 65 of the smear preparation device 6 waits for the reception of the measurement order, and when the measurement order which is transmitted from the examination information management device 9 is received by the smear preparation device 6, the received measurement order is stored in the controller 65.

When the measurement item "SP" is included in the measurement order, the controller 65 of the smear preparation device 6 prompts the sample dispenser 61 to suction the sample from the sample container T, and drops the suctioned blood sample onto a glass slide. Next, the controller 65 controls the smearing section 62 to smear and dry the blood sample dropped onto the glass slide, and further print it on the glass slide. The controller 65 controls the glass slide transport section 63 and the dyeing section 64 to transport the glass slide on which the blood sample is smeared by the smearing section 62 up to the dyeing position and prompt the dyeing section 64 to supply a dyeing solution to the glass slide, thereby preparing a smear.

The controller 65 acquires the result of preparation of a smear, that is, the result of smearing of the blood sample on the glass slide, and the result of dyeing of the smear (hereinafter, referred to as "smear preparation result") as described above, and transmits the smear preparation result to each of the system control device 8 and the examination information management device 9. The smear preparation device 6 sequentially executes such a smear preparation operation with respect to the samples for which the measurement order includes the item "SP" among the samples which are held in the sample rack L.

The processing result which is transmitted as described above, that is, the measurement result which is transmitted from the blood cell analyzer 5, or the smear preparation result which is transmitted from the smear preparation device 6 is received by the system control device 8 and the examination information management device 9. When receiving the processing result, the examination information management device 9 determines whether an additional measurement for the sample is needed on the basis of the received processing result, and when the additional measurement is needed, a measurement item for the additional measurement is determined. For example, in the case of a sample which has been measured with respect to CBC and DIFF, when the measurement result of a predetermined item deviates from a predetermined standard, RET or SP is determined as an additional measurement item. When the additional measurement item is determined as described above, the examination information management device 9 generates a measurement order including the additional measurement item, and stores the measurement order on the hard disk.

The CPU 81a of the system control device 8 determines whether the processing result has been received (Step S205). When the processing result is not received (NO in Step S205), the CPU 81a repeats the process of Step S205 until the processing result is received. On the other hand, when the processing result is received in Step S205 (YES in Step S205), the CPU 81a registers progress information in the sample processing progress database DB on the basis of the processing result. When the processing result is received with an additional measurement order or change notification data, the CPU 81a registers progress information on the basis of the processing result and the additional measurement order or the change notification data (Step S206).

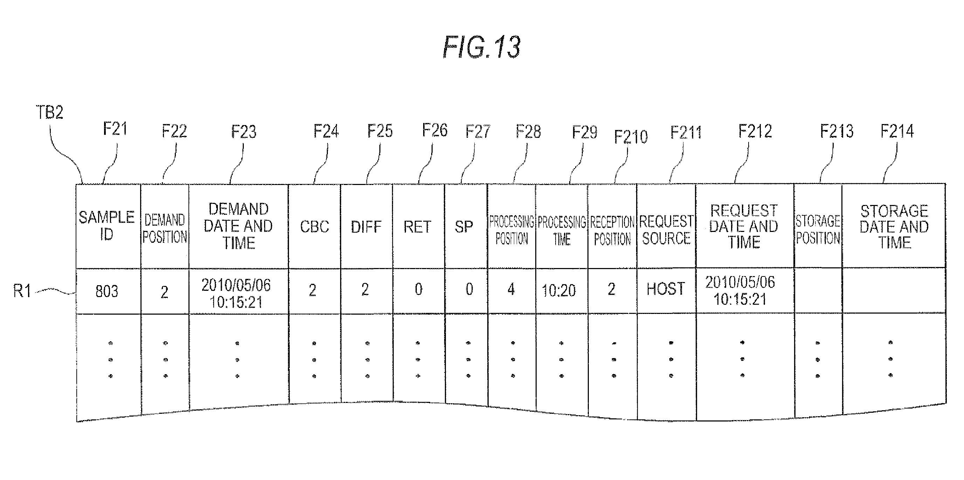

The process of Step S206 will be described in detail. Fig. 13 is a schematic diagram showing an example of the progress status table TB2 with the updated progress information. This example shows the case in which the sample measurement is performed with respect to the measurement items CBC and DIFF by the measuring unit 52 from the state shown in Fig. 11 and the measurement result thereof is obtained. Since the measurement result received by the system control device 8 includes the data about CBC and DIFF, the state data of the fields F24 and F25 is changed from "1" to "2" in the record R1 of the progress status table TB2 shown in Fig. 11. In addition, in the field F28, the position number "4" indicating the sample transport unit 3b which is connected to the measuring unit 52 is stored, and in the field F29, the measurement time "10:20" is stored.

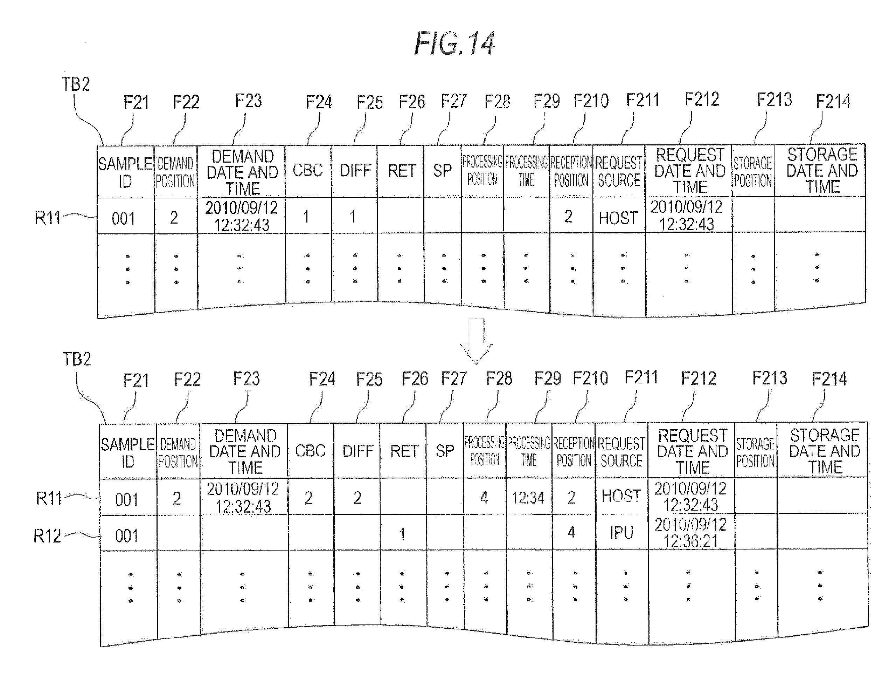

In addition, as described above, the system control device 8 may receive the additional measurement order with the measurement result from the information processing unit 54. In this case, the system control device 8 registers the data in the sample processing progress database DB on the basis of the measurement result and the additional measurement order. Fig. 14 is a schematic diagram illustrating an update of the progress status table TB2 when the additional measurement order is generated by the blood cell analyzer 5. Here, an example is provided and illustrated in which in the examination information management device 9, a measurement order in which the measurement items CBC and DIFF are designated with respect to a sample is registered, and the measuring unit 52 performs the sample measurement with respect to the measurement items CBC and DIFF, and as a result, the information processing unit 54 issues an additional measurement order to issue an instruction for an additional measurement of the sample with respect to the measurement item RET. First, the system control device 8 which receives the measurement order for this sample from the examination information management device 9 creates a new record R11 in the progress status table TB2, stores the state data "1" in the fields F24 and F25, stores the position number "2" of the barcode reading unit 22 in the field F210, stores "HOST" indicating the examination information management device which is a transmission source in the field F211, and stores the request date and time information "2010/09/12 12:32:43" in the field F212. After the transport of the sample to the measuring unit 52, the measurement result of the sample and an additional measurement order are transmitted from the information processing unit 54. In this measurement result, the measurement data of the measurement items CBC and DIFF is included, and in the above-described additional measurement order, the measurement item RET is designated. The system control device 8 which receives such a measurement result and the additional measurement order changes the state data of the fields F24 and F25 from "1" to "2" in the record R11 of the progress status table TB2, stores the position number "4" indicating the sample transport unit 3b which is connected to the measuring unit 52 in the field F28, and stores the measurement time "12:34" in the field F29. In addition, the system control device 8 creates a new record R12 corresponding to the received additional measurement order, stores the state data "1" in the field F26, stores the position number "4" of the sample transport unit 3b which is reception position information in the field F210, stores "IPU" indicating the information processing unit 54 which is a transmission source in the field F211, and stores the request date and time information "2010/09/12 12:36:21" in the field F212.

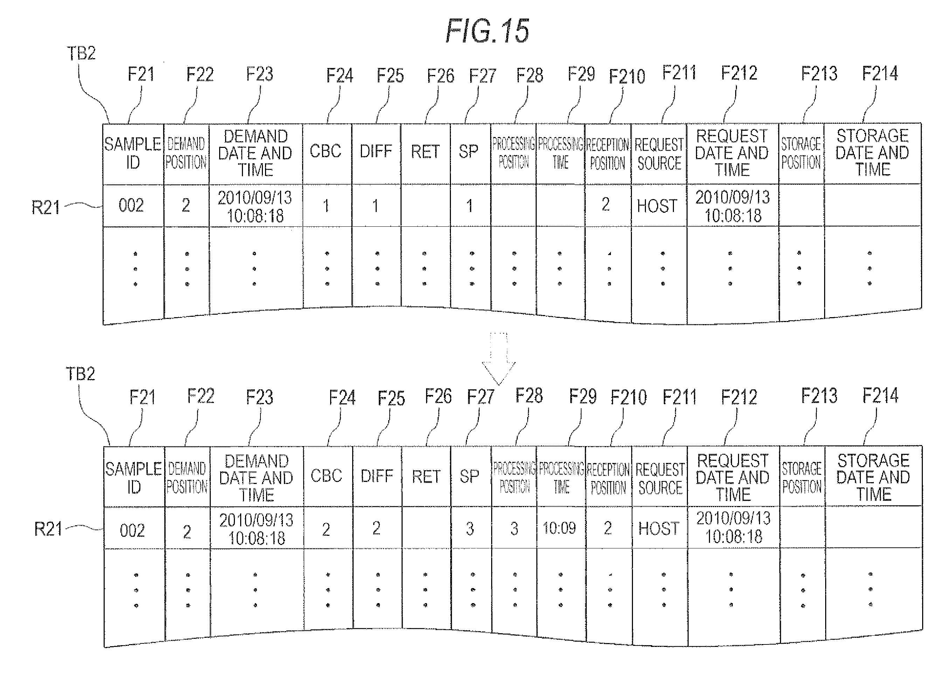

In addition, as described above, when the system control device 8 receives the change notification data with the measurement result from the information processing unit 54, the data is registered in the sample processing progress database DB on the basis of the measurement result and the change notification data. Fig. 15 is a schematic diagram illustrating an update of the progress status table TB2 when the measurement order is changed. Here, an example is provided and illustrated in which in the examination information management device 9, a measurement order in which the measurement items CBC, DIFF, and SP are designated with respect to a sample is registered, and by the change notification data, it is notified that the measurement order has a change in which SP is deleted therefrom. First, the system control device 8 which receives the measurement order for this sample from the examination information management device 9 creates a new record R21 in the progress status table TB2, stores the state data "1" in the fields F24, F25, and F27, stores the position number "2" of the barcode reading unit 22 in the field F210, stores "HOST" indicating the examination information management device which is a transmission source in the field F211, and stores the request date and time information "2010/09/13 10: 08: 18" in the field F212. After the transport of the sample to the measuring unit 51, the measurement result of the sample and the change notification data are transmitted from the information processing unit 54. In this measurement result, the measurement data of the measurement items CBC and DIFF is included, and in the above-described change notification data, it is shown that the measurement order has a change in which the measurement item SP is deleted therefrom. The system control device 8 which receives such a measurement result and the change notification data changes the state data of the fields F24 and F25 from "1" to "2" in the record R21 of the progress status table TB2, stores the position number "3" indicating the sample transport unit 3a which is connected to the measuring unit 51 in the field F28, and stores the measurement time "10:09" in the field F29. In addition, the system control device 8 changes the state data of the field F27 from "1" to "3" to reflect a cancel of the designation of the measurement item SP in the measurement order.

The CPU 81a of the system control device 8 determines whether the processing of all of the samples to be processed in the measuring unit or the smear preparation device 6 which is a transport destination has been completed among the samples which are held in the sample rack L (Step S207). When an unprocessed sample is left (NO in Step S207), the CPU 81a returns the process to Step S205, and waits for the reception of the processing result. After all of the samples in the sample rack L are processed by the measuring unit 51, 52, or 53, or the smear preparation device 6, the sample transport units 3a, 3b, 3c, and 4 transfer the sample rack to the transport line 3F from the measurement line 3M of the sample transport unit, and stop the sample rack L at the end position of the transport line 3F. That is, the sample transport units 3a, 3b, 3c, and 4 put the discharge of the sample rack L to the next unit on hold until a transport command is given from the system control device 8.

When it is determined that all of the samples have been processed in Step S207 (YES in Step S207), the CPU 81a transmits to the examination information management device 9 order demand data including one of the sample IDs of the samples which are held in the sample rack L which is put on hold to be discharged, and demands an additional measurement order corresponding to the sample ID from the examination information management device 9 (Step S208). The examination information management device 9 retrieves the demanded additional measurement order, and when there is an additional measurement order, the examination information management device 9 transmits the additional measurement order to the system control device 8. When there is no additional measurement order, that is, when the additional measurement is not needed for the sample, the examination information management device 9 transmits additional measurement non-necessity notification data showing that there is no additional measurement order to the system control device 8. The CPU 81a of the system control device 8 waits the reception of the additional measurement order or the additional measurement non-necessity notification data (NO in Step S209), and when the data transmitted from the examination information management device 9 is received by the system control device 8 (YES in Step S209), the CPU 81a determines whether the received data is the additional measurement data or the additional measurement non-necessity notification data (Step S210). When the system control device 8 receives the additional measurement order ("additional measurement order" in Step S210), the CPU 81a creates progress information of the sample processing on the basis of the received additional measurement order, and stores the progress information in the sample processing progress database DB (Step S211).

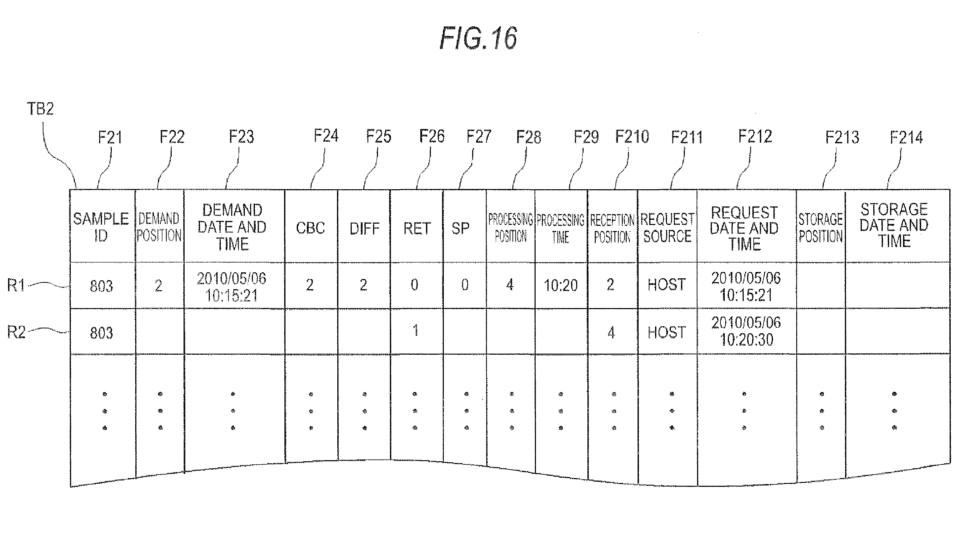

The process of Step S211 will be described. Fig. 16 is a schematic diagram showing an example of the progress status table TB2 with the progress information updated on the basis of the additional measurement order. This example shows the case in which the additional measurement order in which the measurement item RET is designated is generated by the examination information management device 9 from the state shown in Fig. 13 and the additional measurement order is received by the system control device 8. The system control device 8 which receives such an additional measurement order creates a new record R2 corresponding to the received additional measurement order, stores the state data "1" in the field F26, stores the position number "4" of the sample transport unit 3b which is reception position information in the field F210, stores "HOST" indicating the examination information management device 9 which is a transmission source in the field F211, and stores the request date and time information "2010/05/06 10:20:30" in the field F212.

After the process of Step S211 is completed, the CPU 81a returns the process to Step S202, and retrieves the progress information (records R1 and R2 in the case shown in Fig. 16) of the sample processing progress database DB with the rack ID of the sample rack L as a key (Step S202). Furthermore, the CPU 81a executes the process of Step S203, and determines the transport destination of the sample rack L in order to perform the sample processing with respect to a measurement item for which the sample processing is not performed. When the sample measurement is performed by any of the measuring units 51 to 53, the sample rack L is stopped at the end position of the transport line 3F of the sample transport unit corresponding to the measuring unit in which the measurement is performed. That is, before the sample rack reaches the branch point of the next sample transport unit, the transport destination is determined. When the transport destination is determined and a transport command is transmitted to the sample transport unit 3a, 3b, 3c, and 4 from the system control device 8, the sample rack L is output to the subsequent-stage sample transport unit, and in accordance with the transport command, the sample rack is transported to any one on the downstream side of the before-measurement rack holder 33 or the before-process rack holder 44 and the transport line 3F from the branch point of the subsequent-stage sample transport unit.

On the other hand, when the system control device 8 receives the additional measurement non-necessity notification data in Step S210 ("additional measurement non-necessity notification data" in Step S210), the CPU 81a creates progress information of the sample processing on the basis of the received additional measurement non-necessity notification data, and stores the progress information in the sample processing progress database DB (Step S212). In this case, the system control device 8 stores "HOST" indicating the examination information management device 9 which is a transmission source of the additional measurement non-necessity notification data in the field F211 of the progress status table TB2, and stores request date and time information in the field F212.

Furthermore, the CPU 81a transmits a transport command which designates the sample recovery device 7 as the transport destination of the sample rack L (Step S213). The sample rack L which is put on hold at the end position of the transport line 3F of any of the sample transport units 3a, 3b, 3c, and 4 is transported along the transport line 3F of the sample transport device 3, and accommodated in the sample recovery device 7. When accommodating the sample rack L, the controller of the sample recovery device 7 transmits accommodation completion notification data to the system control device 8. The CPU 81a of the system control device 8 determines whether the accommodation completion notification data has been received (Step S214), and waits until the accommodation completion notification data is received (NO in Step S214). When the system control device 8 receives the accommodation completion notification data (YES in Step S214), the CPU 81a registers the storage position information and the storage date and time information in the sample processing progress database DB (Step S215), and ends the process.

### <Progress Status Display Process>

The system control device 8 displays a progress status of sample processing in accordance with progress information accumulated in the sample processing progress database DB. Hereinafter, this progress status display process will be described.

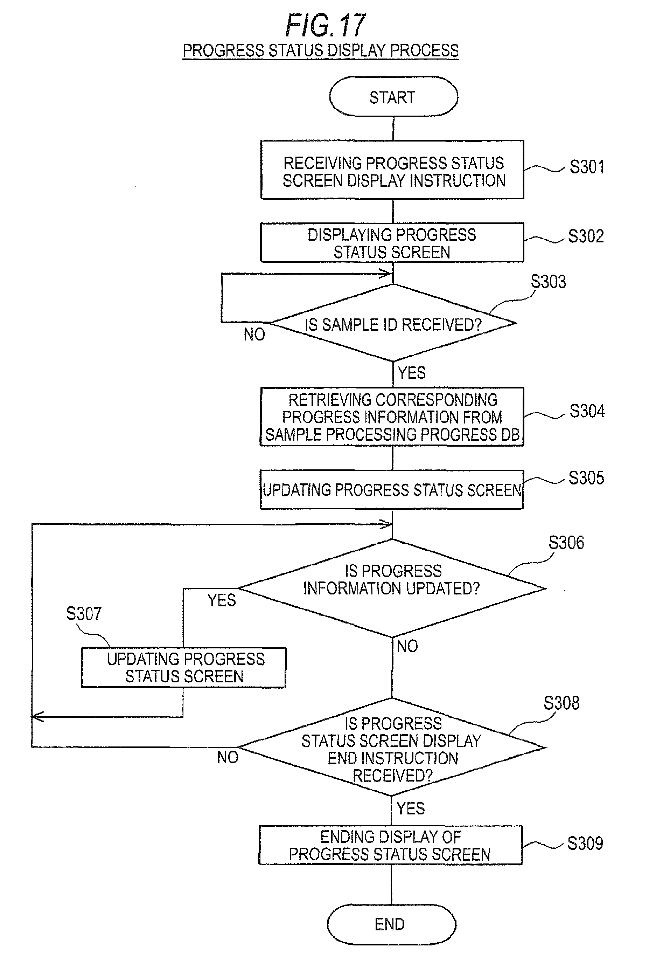

Fig. 17 is a flowchart showing the procedure of the progress status display process. A user can give an instruction for displaying a sample processing progress status screen to the system control device 8 by operating the input section 83 of the system control device 8. The CPU 81a receives the input of such a progress status screen display instruction (Step S301). In the CPU 81a, when an event of receiving the progress status screen display instruction occurs, a process of Step S302 is invoked.

In Step S302, the CPU 81a displays a progress information screen on the image display 82 (Step S302). In this case, in the progress status screen, progress information to be displayed is not designated, and thus nothing is displayed in an area in which the progress information is displayed. In the progress status screen, the sample ID can be input, and a user can give an instruction for retrieving progress information of the sample corresponding to the sample ID to the system control device 8 by inputting the sample ID. The CPU 81a waits for the input of the sample ID (NO in Step S303), and when the input of the sample ID is received (YES in Step S303), the CPU 81a retrieves the progress information corresponding to the sample ID from the sample processing progress database DB (Step S304).

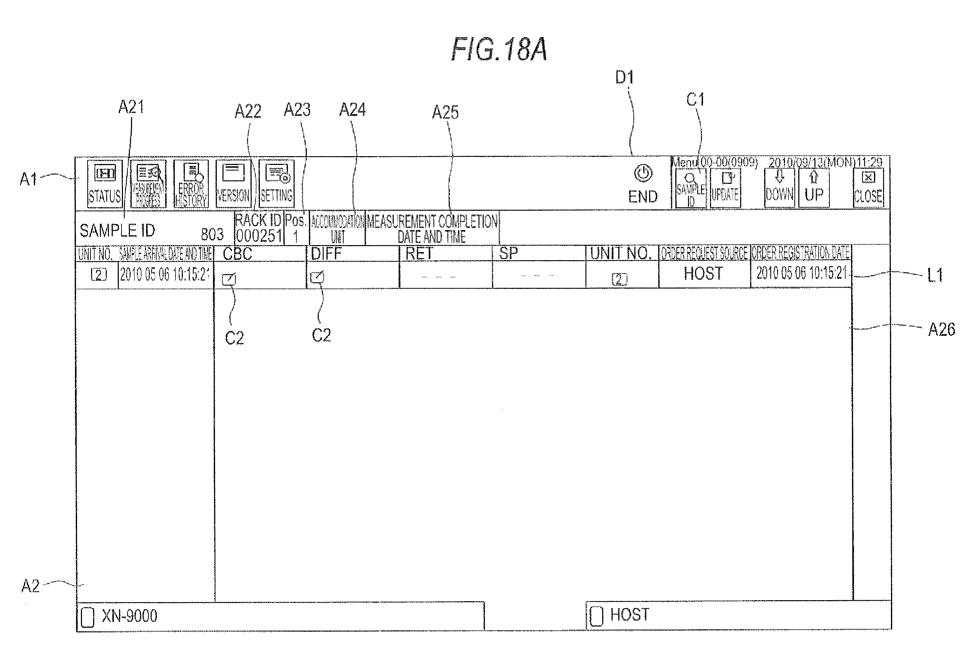

Next, the CPU 81a updates the progress status screen to display the retrieved progress information (Step S305). Figs. 18A to 20B are schematic diagrams each showing an example of the progress status screen. Fig. 18A shows a progress status screen when the progress information shown in Fig. 11 is stored in the sample processing progress database DB. As shown in Fig. 18A, a progress status screen D1 is provided with a tool bar area A1 in which a plurality of icons are arranged and displayed and an information display area A2 in which progress information is displayed. The tool bar area A1 is provided with a retrieval icon C1 for invoking an input box for inputting a sample ID. A user can display the sample ID input box by selecting this retrieval icon through a click of a mouse. Other icons are also assigned with the respective functions, and for example, an icon group which is provided on the left side of the tool bar is assigned with a function of switching the display to a corresponding screen through selection of each of the icons.

In the upper part of the information display area A2, an area A21 which displays the sample ID, an area A22 which displays the rack ID, an area A23 which displays the sample holding position in a sample rack L, an area A24 which displays the sample storage position (storing unit), and an area A25 which displays storage date and time are provided. In the example shown in Fig. 18A, the sample is not stored in the sample recovery device 7, whereby the areas A24 and A25 are blank. In addition, an area A26 which displays a progress status of sample processing as a list is provided below these areas A21 to A25. Such an area A26 is an area in which a progress status of sample processing with respect to a measurement order is displayed as a list for each measurement order which is acquired for the sample by the system control device 8. The area A26 shows the respective items of a sample position (demand position information) when a demand for the measurement order is generated, a date and a time at which there is a demand for the measurement order, states of processes of the respective measurement items CBC, DIFF, RET, and SP (the presence or absence of the measurement order, the sample processing position and processing time, and the presence or absence of a cancel of the measurement order), a sample position when the measurement order is received by the system control device 8 (reception position information), a transmission source of the measurement order (measurement request source), and a date and a time at which the measurement order is requested. In the example shown in Fig. 18A, a line L1 corresponding to the record R1 of the progress status table TB2 shown in Fig. 11 is created, and in this line L1, the information stored in the record R1 is displayed.

In the progress status screen, the measurement order acquisition status and the information on the presence or absence of the processing result (whether the process has been carried out) are displayed by an icon. In the example of Fig. 18A, since the system control device 8 has received a measurement order (initial examination order) with respect to the measurement items CBC and DIFF, and the sample is not measured, an icon C2 indicating the completion of the reception of the measurement order and the unprocessed state is displayed in the columns of the measurement items CBC and DIFF. Since the system control device 8 does not receive a measurement order with respect to the measurement items RET and SP, information "---" indicating that there is no measurement order is displayed in the columns of RET and SP.

In accordance with the record R1 of Fig. 11, the position number "2" is displayed in a reception position information display column of the line L1, "HOST" indicating the examination information management device is displayed in a request source display column, and request date and time information "2010/05/06 10:15:21" is displayed in a request date and time display column. Due to the display described above, a user can easily grasp a state of the sample on the sample process, that is, the fact that there is an initial examination order in which the measurement items CBC and DIFF are designated with regard to the sample, the fact that the sample is not yet processed (initial examination), the fact that the initial examination order is transmitted from the examination information management device 9, the request date and time, the fact that the sample is positioned in the barcode reading unit 22 when the system control device 8 receives the initial examination order, and the reception date and time thereof.

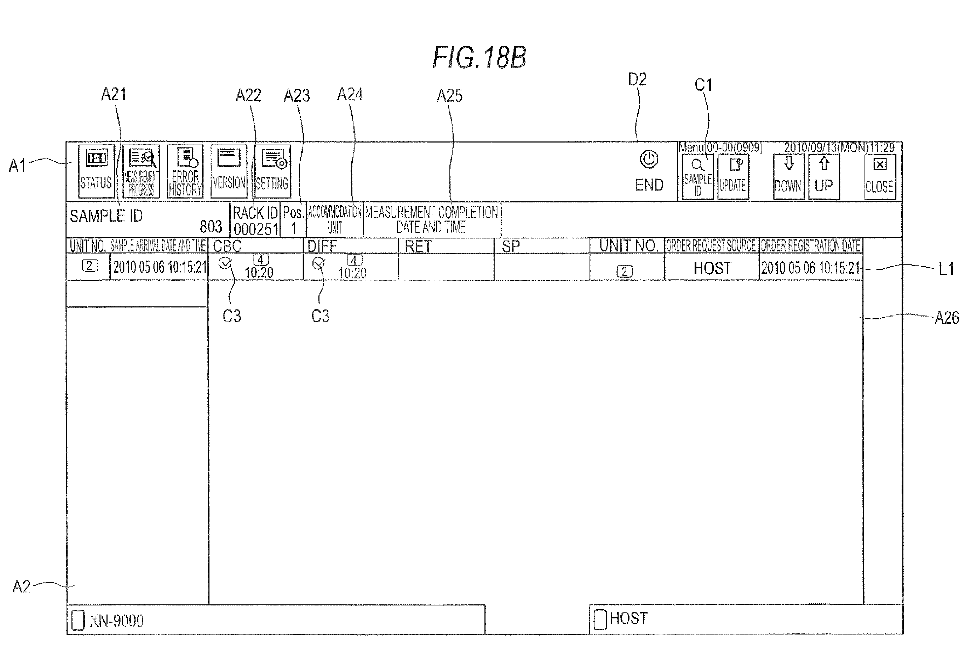

Next, a case will be described in which the sample process has progressed from the above-described state shown in Fig. 18A. Fig. 18B shows a progress status screen when the progress information shown in Fig. 13 is stored in the sample processing progress database DB. In this case, in the record R1 of the progress status table TB2, the state data "2" is in the fields F24 and F25, the position number "4" indicating the sample transport unit 3b which is connected to the measuring unit 52 is stored in the field F28, and the measurement time "10:20" is stored in the field F29. Accordingly, in this case, in a progress status screen D2, an icon C3 indicating the completion of the sample processing is displayed in the columns of the measurement items CBC and DIFF of the line L1, and the position number "4" of the sample transport unit 3b as a position at which the sample is processed, and the measurement time "10:20" are displayed. Due to the display as above, a user can know a state of the sample on the sample process, and processes which have been performed on the sample. That is, it is possible to easily grasp the fact that the measurement of CBC and DIFF is performed by the initial examination order in which the measurement items CBC and DIFF are designated with regard to the sample, the fact that the sample measurement is performed by the measuring unit 52, the measurement date and time thereof, the fact that the initial examination order is transmitted from the examination information management device 9, the request date and time, the fact that the sample is positioned in the barcode reading unit 22 when the system control device 8 receives the initial examination order, and the reception date and time thereof.

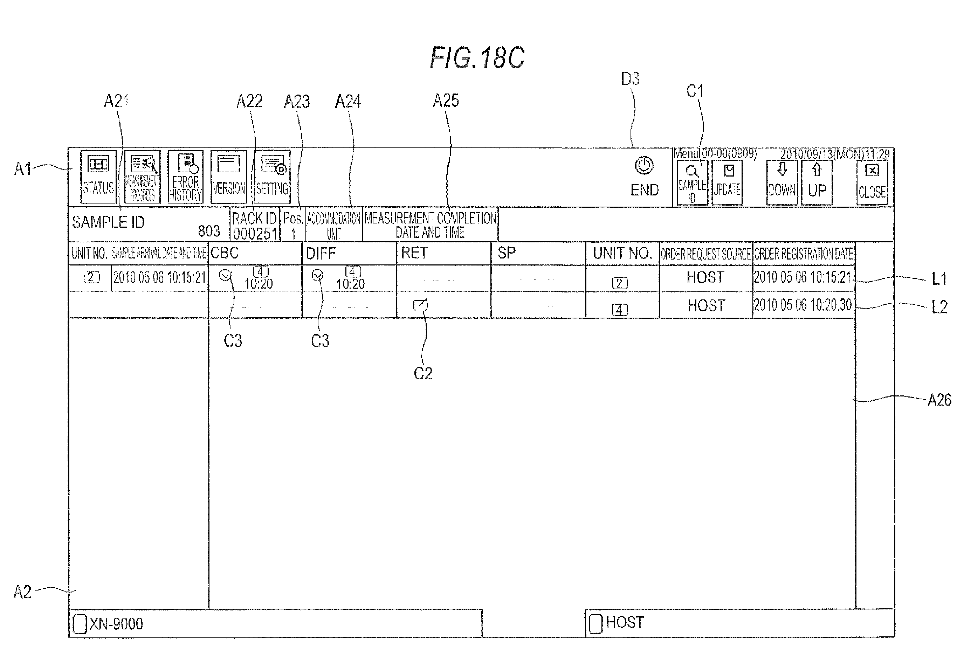

Fig. 18C shows a progress status screen when the progress information shown in Fig. 16 is stored in the sample processing progress database DB. In this case, the record R2 is created in the progress status table TB2. In this record R2, the state data "1" is stored in the field F26, the position number "4" of the sample transport unit 3b which is reception position information of an additional measurement order is stored in the field F210, "HOST" indicating the examination information management device 9 which is an additional measurement order transmission source is stored in the field F211, and the request date and time information "2010/05/06 10:20:30" is stored in the field F212. Accordingly, in this case, in the progress status screen D2, a line L2 corresponding to the record R2 is displayed in addition to the display of the above-described line L1 shown in Fig. 18B. An icon C2 indicating the completion of the reception of the measurement order and the unprocessed state is displayed in the column of the measurement item RET of the line L2, and information "---" indicating that there is no measurement order is displayed in the column of the measurement item SP. In addition, in accordance with the record R2 of Fig. 16, the position number "4" is displayed in the reception position information display column of the line L2, "HOST" indicating the examination information management device is displayed in the request source display column, and request date and time information "2010/05/06 10:20:30" is displayed in the request date and time display column. Due to the display as above, a user can know when and where the measurement order in which which measurement item is designated is transmitted, and whether the sample processing has been performed with respect to the initial examination order and the additional measurement order. That is, due to the display of the line L2, a user can easily grasp the fact that there is an additional measurement order in which the measurement item RET is designated with regard to the sample, the fact that the sample is not yet subjected to the additional measurement, the fact that the additional measurement order is transmitted from the examination information management device 9, and the date and time at which the additional measurement order is requested.

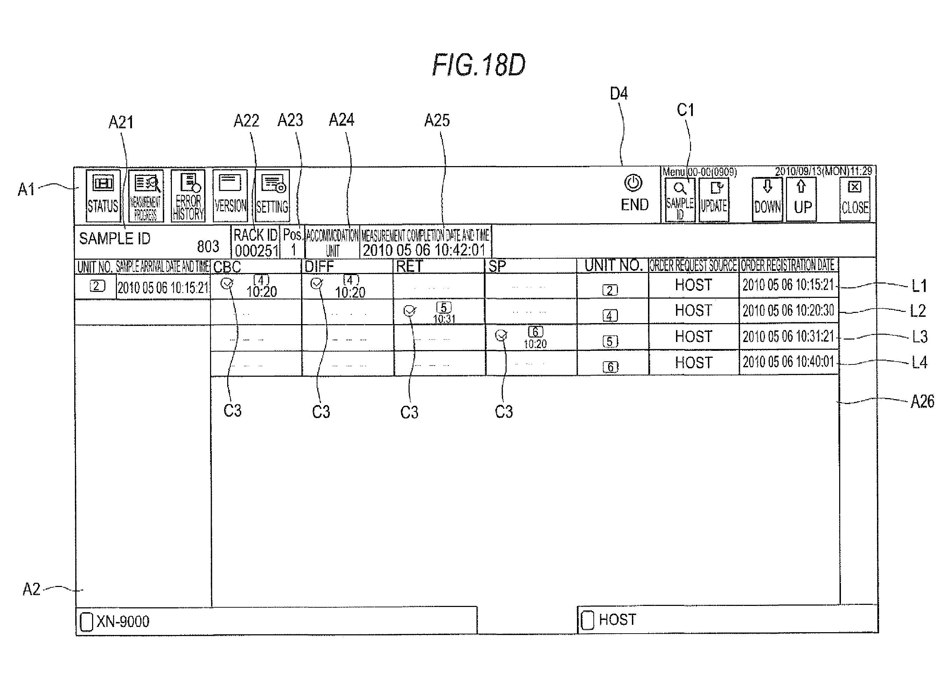

Fig. 18D shows a progress status screen when the sample processing is completed as a result of the further progressing sample process from the state shown in Fig. 18C. This progress status screen D4 is provided with four lines L1 to L4. Since the line L1 is the same as that shown in Fig. 18C, the description thereof will be omitted. In the line L2, an icon C3 indicating the completion of the sample processing is displayed in the column of the measurement item RET, and the position number "5" of the sample transport unit 3c as a position at which the sample is processed, and the measurement time "10:31" are displayed. Accordingly, the fact that the additional measurement is performed with respect to the measurement item RET, the fact that the additional measurement is performed by the measuring unit 53, and the additional measurement date and time thereof are grasped.

In addition, in the line L3, an icon C3 is displayed in the column of the measurement item SP, and the position number "6" of the sample transport unit 4 as a position at which the sample is processed, and the measurement time "10:35" are displayed. In addition, in the line L3, the position number "5" is displayed in the reception position information display column, "HOST" indicating the examination information management device is displayed in the request source display column, and request date and time information "2010/05/06 10:31:21" is displayed in the request date and time display column. Accordingly, the fact that there is a second additional measurement order in which the measurement item SP is designated with regard to the sample, the fact that the sample processing is completed with respect to the measurement item SP, the fact that the sample processing is performed by the measuring unit 53, the sample processing time thereof, the fact that the system control device 8 receives the additional measurement order when the sample is positioned in the sample transport unit 3b, the fact that the additional measurement order is transmitted from the examination information management device 9, and the additional measurement order request date and time are grasped.

In addition, in the line L4, "---" indicating that there is no measurement order is displayed in all of the measurement item columns, and from this, it is understood that no additional measurement is needed. In addition, in the line L4, the position number "6" is displayed in the reception position information display column, "HOST" indicating the examination information management device is displayed in the request source display column, and request date and time information "2010/05/06 10:40:01" is displayed in the request date and time display column. Accordingly, the fact that the system control device 8 receives additional measurement non-necessity notification data when the sample is positioned in the sample transport unit 4, the fact that the additional measurement non-necessity notification data is issued by the examination information management device 9, and the reception date and time thereof are grasped.

Furthermore, in the progress status screen D4, the position number "7" indicating the rack accommodation unit 71 as a storage position is displayed in the area A24, and the storage date and time "2010/05/06 10:42:01" is displayed in the area A25. Accordingly, the fact that this sample has been already subjected to all of the sample processes, and is stored in the rack accommodation unit 71, and the storage date and time thereof are grasped.

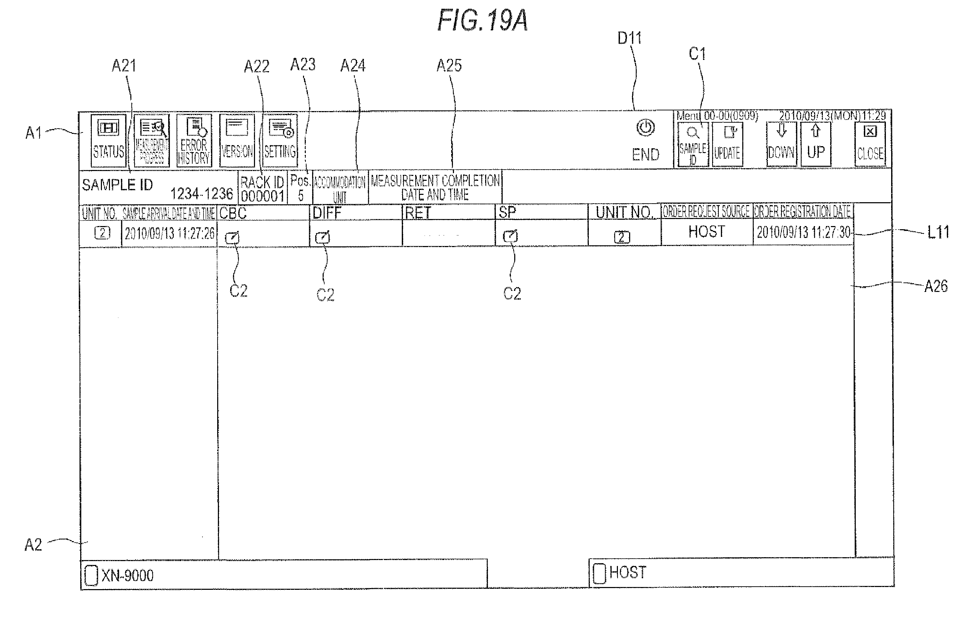

Figs. 19A to 19E show the transition of the progress status screen according to the progress of the sample process. In a progress status screen D11 shown in Fig. 19A, one line L11 is displayed in the area A26, and an icon C2 is displayed in the columns of the measurement items CBC, DIFF, and SP in this line L11. In the reception position information display column, the position number "2" is displayed, and in the request source display column, "HOST" is displayed. Accordingly, the fact that there is an initial examination order in which the measurement items CBC, DIFF, and SP are designated with regard to the sample, the fact that the sample is not yet processed (initial examination), the fact that the initial examination order is transmitted from the examination information management device 9, the fact that the sample is positioned in the barcode reading unit 22 when the system control device 8 receives the initial examination order, and the like are grasped.

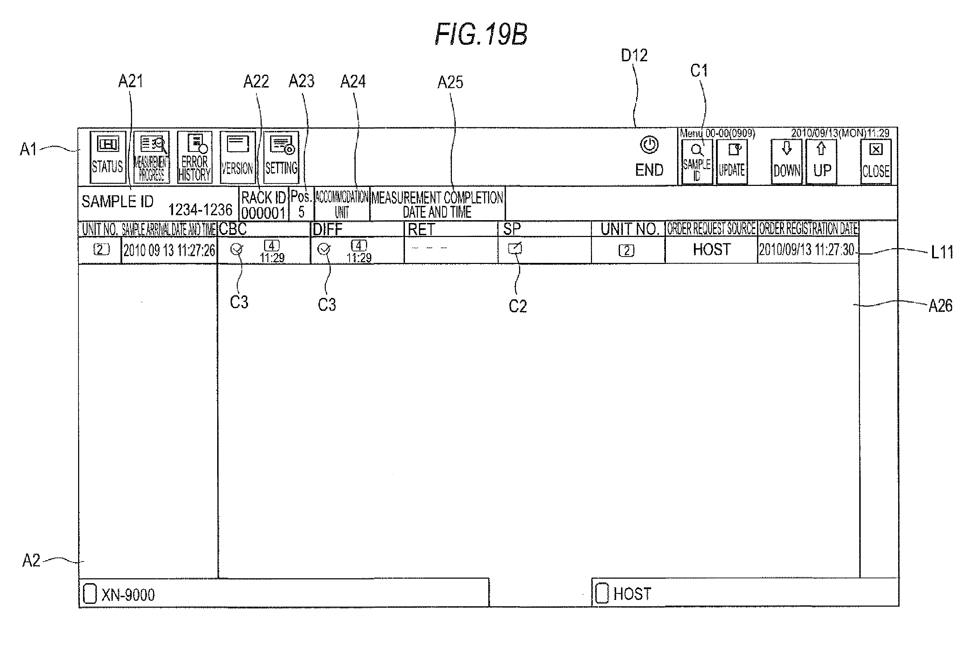

In a progress status screen D12 shown in Fig. 19B, an icon C3 is displayed in the columns of the measurement items CBC and DIFF of the line L11, and the position number "4" of the sample transport unit 3b is displayed as a position at which the sample is processed. In addition, an icon C2 is displayed in the column of the measurement item SP. Accordingly, the fact that the sample is measured with respect to the measurement items CBC and DIFF by the measuring unit 52, and a smear is not prepared is grasped.

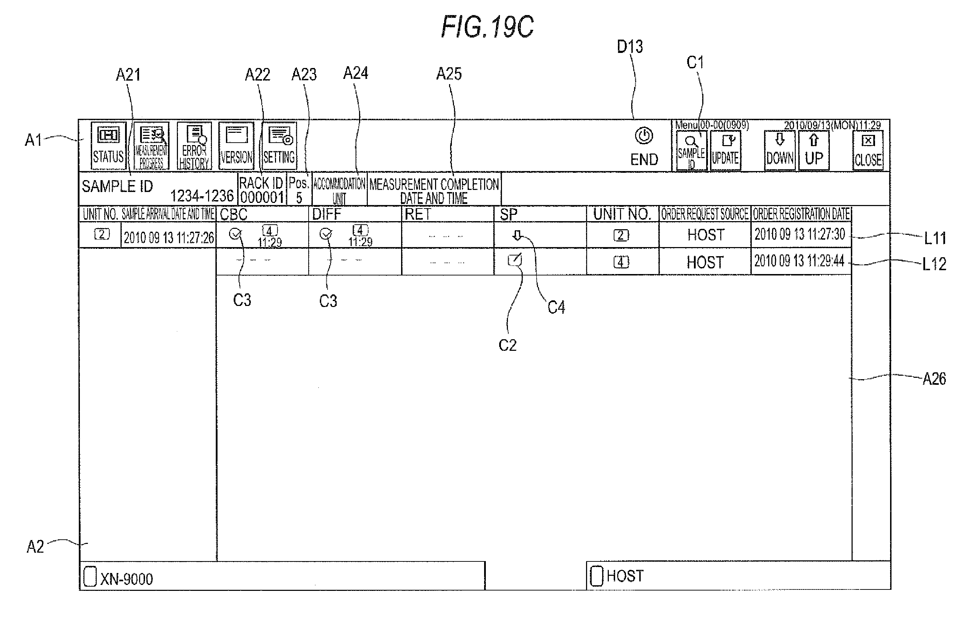

In a progress status screen D13 shown in Fig. 19C, a line L12 is displayed in addition to the line L11. A down-arrow icon C4 is displayed in the column of the measurement item SP of the line L11. This icon C4 indicates that the measurement order in which the same measurement item SP is designated is acquired again later. An icon C2 is displayed in the column of the measurement item SP of the line L12, the position number "4" is displayed in the reception position information display column, and "HOST" is displayed in the request source display column. Accordingly, the fact that the measurement order in which the measurement item SP is designated is transmitted to the system control device 8 from the examination information management device 9 when the sample rack L is in the sample transport unit 3b is grasped.

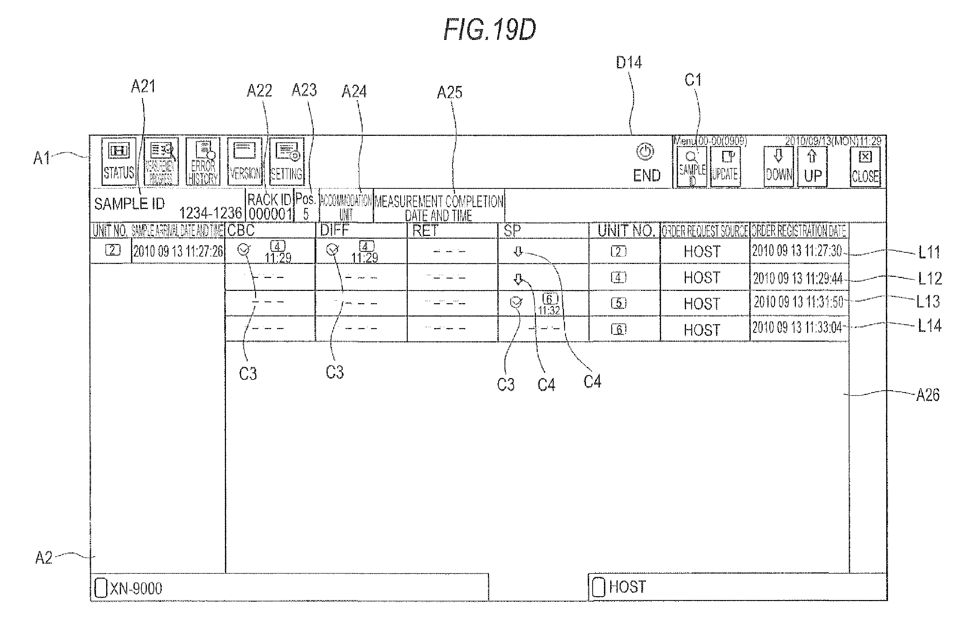

In a progress status screen D14 shown in Fig. 19D, lines L13 and L14 are displayed in addition to the lines L11 and L12. A down-arrow icon C4 is displayed in the column of the measurement item SP of the lines L11 and L12. An icon C3 is displayed in the column of the measurement item SP of the line L13, and the position number "6" of the sample transport unit 4 is displayed as a position at which the sample is processed. In addition, the position number "5" is displayed in the reception position information display column, and "HOST" is displayed in the request source display column. Accordingly, the fact that the measurement order in which the measurement item SP is designated is transmitted to the system control device 8 from the examination information management device 9 when the sample rack L is in the sample transport unit 3c, and the fact that the sample processing is performed with respect to the measurement item SP by the smear preparation device 6 are grasped. In addition, in the line L14, "---" indicating that there is no measurement order is displayed in all of the measurement item columns, and from this, it is understood that no additional measurement is needed. In addition, in the line L14, the position number "6" is displayed in the reception position information display column, and "HOST" indicating the examination information management device is displayed in the request source display column. Accordingly, the fact that the system control device 8 receives additional measurement non-necessity notification data when the sample is positioned in the sample transport unit 4, and the fact that the additional measurement non-necessity notification data is issued by the examination information management device 9 are grasped.

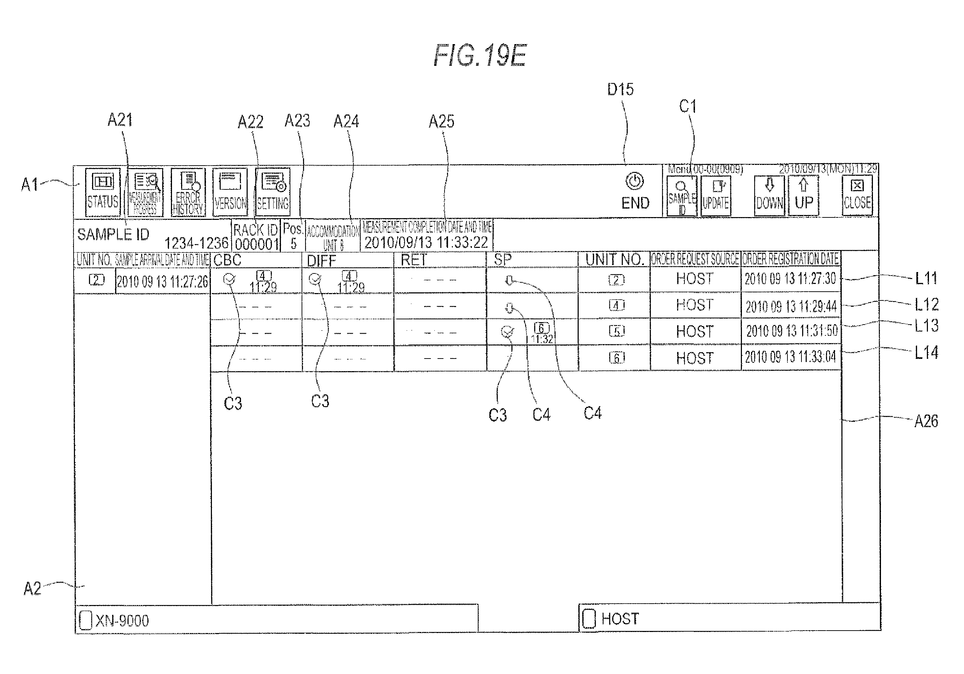

In a progress status screen D15 shown in Fig. 19E, the position number "7" indicating the rack accommodation unit 71 as a storage position is displayed in the area A24, and the storage date and time "2010/09/13 11:33:22" is displayed in the area A25. Accordingly, the fact that this sample has been already subjected to all of the sample processes, and is stored in the rack accommodation unit 71, and the storage date and time thereof are grasped.

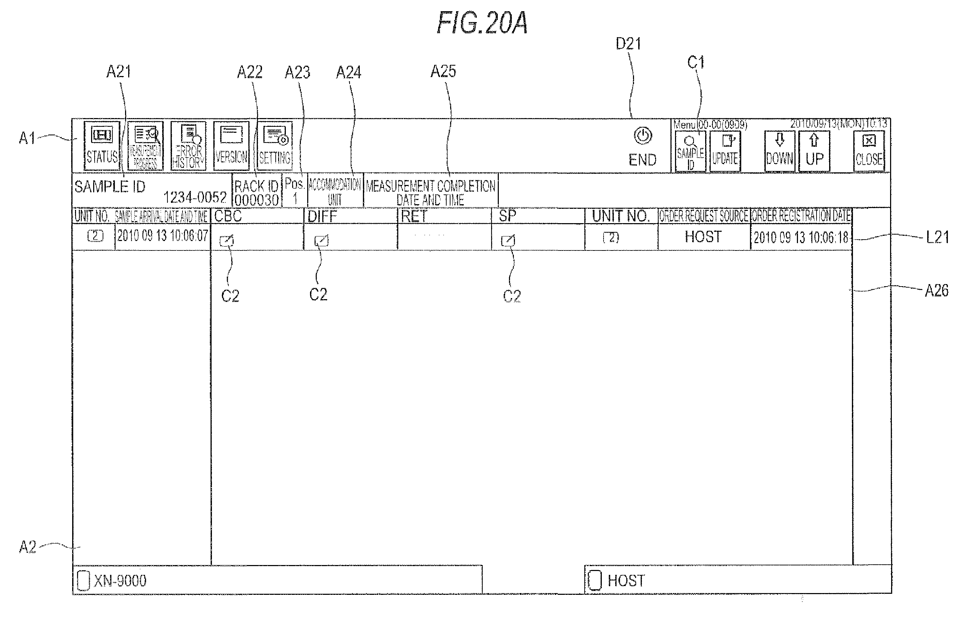

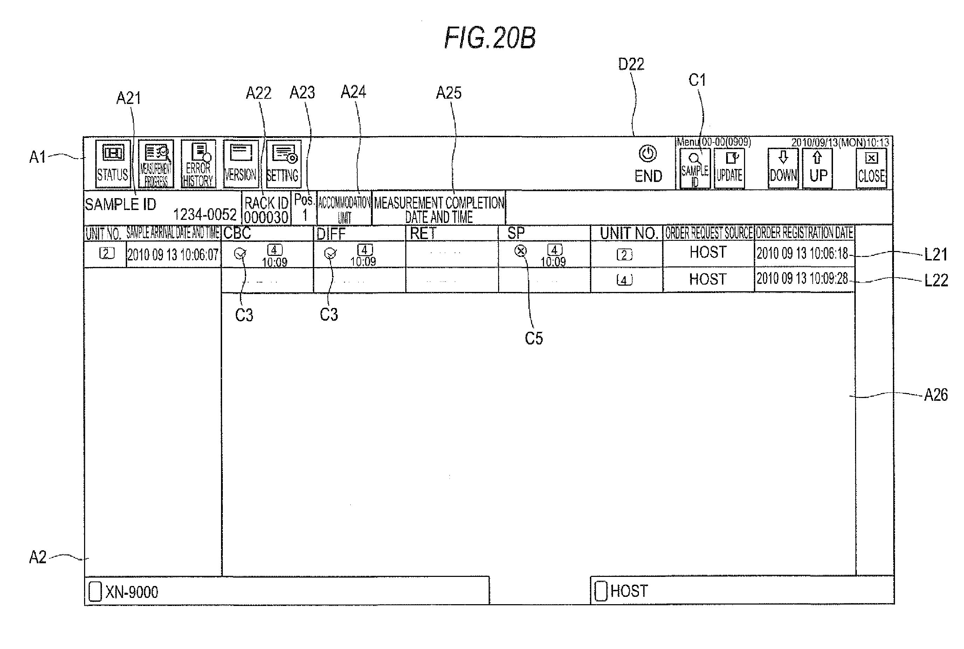

Figs. 20A and 20B show a progress status screen when the progress information shown in Fig. 15 is stored in the sample processing progress database DB. In a progress status screen D21 shown in Fig. 20A, one line L21 is displayed in the area A26, and an icon C2 is displayed in the columns of the measurement items CBC, DIFF, and SP in this line L21. In the reception position information display column, the position number "2" is displayed, and in the request source display column, "HOST" is displayed. Accordingly, the fact that there is an initial examination order in which the measurement items CBC, DIFF, and SP are designated with regard to the sample, the fact that the sample is not yet processed (initial examination), the fact that the initial examination order is transmitted from the examination information management device 9, the fact that the sample is positioned in the barcode reading unit 22 when the system control device 8 receives the initial examination order, and the like are grasped.

In a progress status screen D22 shown in Fig. 20B, an icon C3 is displayed in the columns of the measurement items CBC and DIFF of the line L21, and the position number "4" of the sample transport unit 3b is displayed as a position at which the sample is processed. In addition, an icon C5 indicating a cancel of the measurement order is displayed in the column of the measurement item SP. Accordingly, the fact that the sample is measured with respect to the measurement items CBC and DIFF by the measuring unit 52, and the fact that when the blood cell analyzer 5 inquires of the examination information management device 9 about the measurement order, the designation of the measurement item SP is canceled from the measurement order are grasped. In addition, in the progress status screen D22, a line L22 is displayed. In this line L22, "---" indicating that there is no measurement order is displayed in all of the measurement item columns, and from this, it is understood that no additional measurement is needed. In addition, in the line L22, the position number "4" is displayed in the reception position information display column, and "HOST" indicating the examination information management device is displayed in the request source display column. Accordingly, the fact that the system control device 8 receives additional measurement non-necessity notification data when the sample is positioned in the sample transport unit 3b, and the fact that the additional measurement non-necessity notification data is issued by the examination information management device 9 are grasped.

Next, the CPU 81a determines whether the progress information is updated in the sample processing progress database DB, that is, whether new data corresponding to the sample ID is registered (Step S306). When the progress information is updated (YES in Step S306), the CPU 81a updates the progress status screen in accordance with the new progress information (Step S307), and returns the process to Step S306. As a result, for example, when the progress information of the sample processing progress database DB is updated from the state shown in Fig. 11 to the state shown in Fig. 13, the progress status screen transits from the state shown in Fig. 18A to the state shown in Fig. 18B.

On the other hand, when the progress information is not updated in Step S306 (NO in Step S306), the CPU 81a determines whether a progress status screen display end instruction is received (Step S308). When the display end instruction is not received (NO in Step S308), the CPU 81a returns the process to Step S306. On the other hand, in Step S308, when the progress status screen display end instruction is received (YES in Step S308), the CPU 81a ends the display of the progress status screen (Step S309), and ends the process.

As described in detail above, in the sample processing system 1 according to this embodiment, the progress status screen is displayed by the system control device 8, and progress information of the sample processing is displayed for each measurement order which is received by the system control device 8. Accordingly, a user can easily grasp whether an additional measurement order has been generated after the reception of the initial examination order, and whether the measurement order has been changed.

In addition, since the progress information is displayed for each position at which the system control device 8 receives the measurement order during the sample process, a user can grasp which process has been performed at which position through which path.

### (Other Embodiments)

In the above-described embodiments, the case has been described in which as the sample processing, the sample is measured by the measuring units 51 to 53 and a smear of the sample is prepared by the smear preparation device 6, but the invention is not limited thereto. The sample processing may be other sample processings, for example, the measurement of blood coagulation by a blood coagulation measurement device, immune assay by an immunoassay device, biochemical analysis by a biochemical analyzer, and urine assay by a urine analyzer.

In addition, the configuration has been described in which the barcode readers 516 are disposed inside the housings of the measuring units 51, 52, and 53, respectively, but the invention is not limited thereto. A configuration may also be provided in which the barcode reader 516 may be disposed outside the housing to read a sample ID from the sample barcode of a sample container T held in a sample rack L on the measurement line 3M.

In addition, a configuration may also be provided in which the measuring units 51, 52, and 53 directly suction the sample from a sample container T which is held in a sample rack L on the measurement line 3M.

In addition, in the above-described embodiments, the configuration has been described in which the sample ID is printed (recorded) on the barcode label BL as a sample barcode, and read by the barcode reader 22b or 516, but the invention is not limited thereto. A configuration may also be provided in which a RFID tag on which the sample ID is recorded is adhered to a sample container, and a receiver receives the sample ID from the RFID tag through wireless communication. In addition, a configuration may also be provided in which a magnetic label on which the sample ID is recorded as a magnetic code is adhered to a sample container, and the sample ID is read by a magnetic code reader, and a configuration may also be provided in which a label on which a character string indicating the sample ID is printed is adhered to a sample container, and the character string is imaged by a camera to acquire the sample ID by image processing. Any configuration may be employed if the recording medium on which the sample ID is recorded is adhered to a sample container or the sample ID is directly recorded on a sample container, and the sample ID is read by the reader.

In addition, in the above-described embodiments, the configuration has been described in which the sample transport device 3 is constituted of the independent sample transport units 3a, 3b, 3c, and 4, but the invention is not limited thereto. A configuration may also be provided in which a sample transport section having an integral and inseparable configuration is disposed ahead of the measuring units 51, 52, and 53, and the smear preparation device 6 to thereby transport a sample rack L to each of the measuring units 51, 52, and 53, and the smear preparation device 6. In addition, in this embodiment, the configuration has been described in which the sample transport system 100 is constituted of the independent sample sending device 2, sample transport device 3, and sample recovery device 7, but the invention is not limited thereto. A configuration may also be provided in which the sample processing system has an integral and inseparable configuration with the functions of the sample sending device 2, the sample transport device 3, and the sample recovery device 7.

In addition, in the above-described embodiments, the configuration has been described in which the sample processing system 1 has the plurality of measuring units 51 to 53, and the smear preparation device 6, but the invention is not limited thereto. A configuration may also be provided in which the sample processing system 1 is provided with one sample processing device, for example, one measuring unit.

In addition, in the above-described embodiments, the configuration has been described in which the sample can be measured with respect to CBC and DIFF, but cannot be measured with respect to RET in the measuring units 51 and 52, and the sample can be measured with respect to CBC, DIFF, and RET in the measuring unit 53, but the invention is not limited t hereto. For example, a configuration may also be provided in which the sample can be measured with respect to the same measurement items (CBC, DIFF, RET) in all of the measuring units 51, 52, and 53.

In addition, in the above-described embodiments, the configuration has been described in which when the sample processing is completed, an icon C3 indicating the completion of the sample processing is displayed as a processing result for each measurement order, but the invention is not limited thereto. A configuration may also be provided in which when an error occurs during the sample processing and thus the sample processing is interrupted, a symbol indicating the interruption due to the error may be displayed as a processing result.

In addition, in the above-described embodiments, the configuration has been described in which the reception position information and the demand position information of the measurement order are displayed in the progress status screen, but the invention is not limited thereto. A configuration may also be provided in which any one of the reception position information and the demand position information is displayed in the progress status screen. In addition, a configuration may also be provided in which the demand position information indicating the position of the sample when the system control device 8 demands a processing order is accumulated for each processing order, and the demand position information is displayed for each processing order in place of the reception position information in the progress status screen.

In addition, in the above-described embodiments, the configuration has been described in which the blood cell analyzer 5 is provided with the three measuring units 51, 52, and 53, and the information processing unit 54, but the invention is not limited thereto. A configuration may also be provided in which one or three or more measuring units are provided, and the measuring unit and the information processing unit are configured to be integral with each other. In addition, a configuration may also be provided in which the information processing unit 54 does not control the mechanisms of the measuring units 51, 52, and 53, each of the measuring units is provided with a controller formed of a CPU, a memory and the like to control each of the measuring units by these controllers, and the measurement data obtained by each of the measuring units is processed by the information processing unit to generate a sample analysis result.

In addition, in the above-described embodiments, the configuration has been described in which the single computer 8a executes all of the processes of the computer program 84a, but the invention is not limited thereto. A dispersion system may be provided in which the same processes as the above-described computer program 84a are dispersed to a plurality of devices (computers) to be executed.

## Claims

1. A sample processing system comprising:
a transporting device that transports a sample;
a plurality of sample processing devices that are arranged along a transport path for the sample transported by the transporting device and configured to process the sample transported by the transporting device based on a processing order;
a controller configured to receive a first processing order for the sample and control the transporting device to transport the sample based on the received first processing order, and configured to receive a second processing order for the sample additionally and control the transporting device to transport the sample based on the received second processing order; and
a display,
wherein the controller is configured to prompt the display to show progress information indicating a progress status of processing the sample with respect to each of the first and second processing orders.

2. The sample processing system according to Claim 1,
wherein the progress information includes sample processing information indicating whether the sample was processed on the basis of the first or second processing order.

3. The sample processing system according to Claim 2,
wherein the progress information includes specification information which specifies a sample processing device executing the sample processing.

4. The sample processing system according to Claim 3,
wherein the transporting device is provided with a plurality of transporting units corresponding to the plurality of sample processing devices, and
the controller prompts the display to show information, as the specification information, which specifies a transporting unit corresponding to the sample processing device executing the sample processing.

5. The sample processing system according to any one of claims 1 through 4,
wherein the progress information includes position information indicating a position of the sample on the transport path when the controller receives the processing order.

6. The sample processing system according to any one of claims 1 through 5,
wherein the progress information includes time information indicating a reception time at which the processing order is received.

7. The sample processing system according to any one of claims 1 through 6,
wherein the controller is configured to additionally receive a third processing order while the sample is transported by the transporting device on the basis of the additionally received second processing order, and configured to prompt the display to show progress information indicating a progress status of processing the sample with respect to each of the first, second, and third processing orders when receiving the third processing order.

8. The sample processing system according to any one of claims 1 through 7,
wherein the controller is configured to receive a change in the processing order, and
the progress information includes information relates to the change in the processing order.

9. The sample processing system, according to any one of claims 1 through 8,
wherein the controller is configured to prompt the display to show a progress screen image which displays the progress information, and
when the first and second processing orders are received, the controller controls the display to show the progress screen image which has a first processing order area which displays progress information corresponding to the first processing order, and a second processing order area which displays progress information corresponding to the second processing order.

10. The sample processing system according to Claim 9,
wherein the first processing order area has a first processing item area corresponding to a first processing item and a second processing item area corresponding to a second processing item, and
when the first processing item is included in the first processing order, the controller displays, in the first processing item area, processing request information indicating that there is a sample processing request with respect to the first processing item.

11. The sample processing system according to Claim 10,
wherein when the sample has been processed for the first processing item on the basis of the first processing order, the controller displays, in the first processing item area, processing completion information indicating that the sample processing is completed for the first processing item.

12. The sample processing system according to Claim 10 or Claim 11,
wherein when the sample has been processed for the first processing item on the basis of the first processing order, the controller displays in the first processing item area specification information which specifies a sample processing device executing the sample processing for the first processing item.

13. The sample processing system according to any one of claims 9 through 12,
wherein the second processing order area has a third processing item area corresponding to a first processing item and a fourth processing item area corresponding to a second processing item, and
when the first processing item is included in the first and second processing orders, and the sample has been processed for the first processing item on the basis of the second processing order, the controller displays in the third processing item area processing completion information indicating that the sample processing is completed for the first processing item.

14. The sample processing system according to any one of claims 9 through 13,
wherein the controller displays the first and second processing order areas as lines in the progress screen image.

15. A method of processing sample in a sample processing system which includes a transporting device and a plurality of sample processing devices, the method comprising:
when receiving a first processing order for processing a sample, transporting the sample by the transporting device on the basis of the received first processing order;
displaying progress information indicating a progress status of processing the sample with respect to the first processing order on a display;
when receiving a second processing order for processing the sample while the sample is on the transport path, transporting the sample by the transporting device on the basis of the received second processing order; and
displaying progress information indicating a progress status of processing the sample with respect to each of the first and second processing orders on the display.
